# EUROPEAN PATENT APPLICATION

(11) **EP 4 629 713 A1**
(43) Date of publication of application: **08.10.2025**
(21) Application number: 23896099.1
(22) Date of filing: 02.08.2023
(51) Int. Cl.: H04W 60/00

(54) **DOWNLINK SIGNALING TRANSMISSION METHOD AND APPARATUS, AND STORAGE MEDIUM**

(30) Priority: 29.11.2022 CN 202211516184
(71) Applicant: Datang Mobile Communications Equipment Co., Ltd., Beijing 100085 (CN)
(72) Inventor: GU, Xiaofei, Beijing 100085 (CN); WU, Lichen, Beijing 100085 (CN)
(74) Representative: Studio Torta S.p.A.
(86) International application number: PCT/CN2023/110808
(87) International publication number: WO 2024/113936

(57) **Abstract**

The present invention discloses a method and an apparatus for downlink signaling transmission, and a storage medium, to address a technical problem of the lack of a downlink signaling transmission solution based on a service-based RAN architecture, and the method includes: receiving a downlink signaling message sent by a first network element in a core network; where the downlink signaling message is generated for a target terminal, the first network element is configured to query downlink signaling routing data from a second network element in the core network and determine, according to the downlink signaling routing data, that an RANF currently serving the target terminal is the first RANF, and the downlink signaling routing data is used for recording a mapping relationship between an RANF most recently serving a terminal and the terminal; and sending the downlink signaling message to the target terminal.

## Description

### CROSS-REFERENCE TO RELATED APPLICATIONS

This disclosure claims priority to Chinese patent application No. 202211516184.8, filed with the China National Intellectual Property Administration on November 29, 2022, and entitled "METHOD AND APPARATUS FOR DOWNLINK SIGNALING TRANSMISSION, AND STORAGE MEDIUM", the entire contents of which are incorporated by reference in this disclosure.

### TECHNICAL FIELD

The present disclosure relates to the field of mobile communications and, in particular, to a method and an apparatus for downlink signaling transmission, and a storage medium.

### BACKGROUND

In new-generation wireless communications, the fifth-generation mobile communication (the fifth generation mobile network, 5G) core network adopts a service-based architecture as its foundational network architecture, with further optimizations based on separation of a control plane and a user plane.

The control plane of the 5G core network is modularized into different network functions, the decoupled network functions may be independently scaled, independently evolved, and deployed as needed, and each network function includes a plurality of network function services, enabling on-demand customization of core network functionalities to flexibly support various business scenarios and requirements.

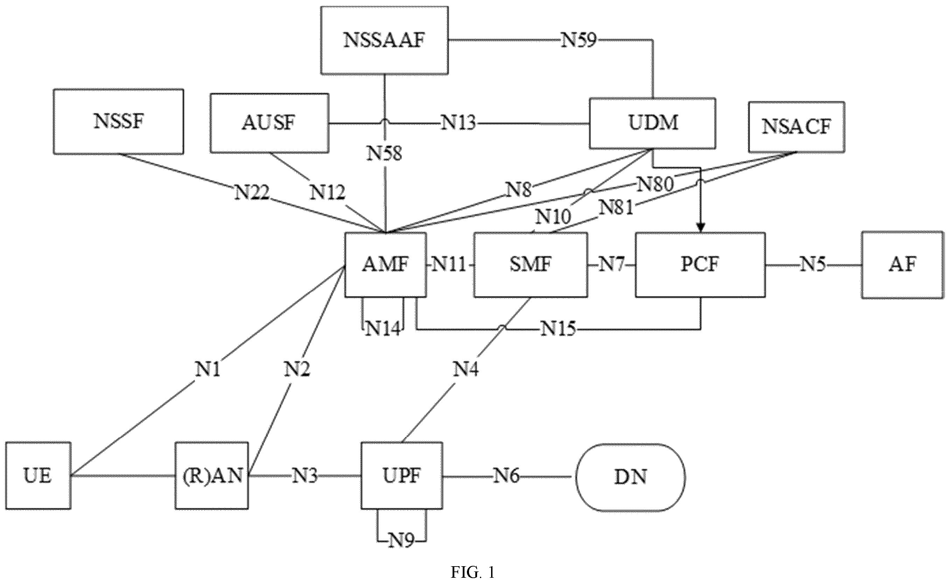

Please refer to FIG. 1, which is a diagram of a 5G system network architecture.

A 5G system includes a (radio) access network ((Radio) Access Network, R (AN)) and a core network, the core network includes following network functions: a network slice selection function (Network Slice Selection Function, NSSF), an authentication server function (Authentication Server Function, AUSF), a network slice specific authentication and authorization function (Network Slice Specific Authentication and Authorization Function, NSSAAF), unified data management (Unified Data Management, UDM), a network slice admission control function (Network Slice Admission Control Function, NSACF), an access and mobility management function (Access and Mobility Management Function, AMF), a policy control function (Policy Control Function, PCF), an application function (Application Function, AF), a user plane function (User Plane Function, UPF), and a data network (Data Network, DN). N1 to N81 are communication interfaces between two network elements which are correspondingly connected in the 5G system.

From FIG. 1, it can be seen that in the existing 5G network architecture, the AMF and the RAN are connected via an N2 interface, other NFs on the core network side need to perform information transparent transmission relay via the AMF to send downlink signaling to the RAN side. However, in the future, after an RAN in a 6G network adopts a service-based architecture, the N2 interface between the AMF and the RAN will no longer exist, and the RAN and the NFs in the core network can directly access each other via service-based interfaces, necessitating design of an interaction mechanism between the NFs in the core network and the RAN based on a service-based architecture.

Currently, research on a service-based architecture in a 5G network primarily focuses on a control plane of a core network, while research on a service-based RAN is still in its early stages, and consequently, there is no existing solution for downlink signaling transmission based on a service-based RAN architecture.

### SUMMARY

The present disclosure provides a method and an apparatus for downlink signaling transmission, and a storage medium, to address the technical problem of the lack of a downlink signaling transmission solution based on a service-based RAN architecture.

In a first aspect, to solve the aforementioned technical problem, an embodiment of the present disclosure provides a method for downlink signaling transmission, applied to a first radio access network function RANF, and a technical solution of the method is as follows:
receiving a downlink signaling message sent by a first network element in a core network; where the downlink signaling message is generated for a target terminal, the first network element is configured to query downlink signaling routing data from a second network element in the core network and determine, according to the downlink signaling routing data, that an RANF currently serving the target terminal is the first RANF, and the downlink signaling routing data is used for recording a mapping relationship between an RANF most recently serving a terminal and the terminal; and
sending the downlink signaling message to the target terminal.

In a possible implementation, before the receiving a downlink signaling message sent by a first network element, the following is further included:
if the target terminal is in an idle state, paging, according to indication information from an access and mobility management function AMF, the target terminal in the idle state; where the AMF is configured to send, according to a paging request from the first network element, the indication information, and the paging request is used for paging the target terminal in the idle state; and
after completing the paging, updating the downlink signaling routing data.

In a possible implementation, the updating the downlink signaling routing data includes:
sending an update request for updating downlink signaling routing data of the target terminal to the second network element; where the update request carries a mapping relationship between an identifier of the first RANF and an identifier of the target terminal, and the second network element is configured to save, according to the request message, the mapping relationship between the identifier of the first RANF and the identifier of the target terminal in the downlink signaling routing data; and
receiving a response message returned by the second network element based on the update request.

In a possible implementation, before the receiving a downlink signaling message sent by a first network element, the following is further included:
if the target terminal is in an inactive state, receiving a regional paging request sent by the first network element; where the regional paging request is generated by the first network element after determining, through a query on the downlink signaling routing data stored in the second network element, that the first RANF most recently serves the target terminal;
executing, according to the regional paging request, regional paging; and
after completing the regional paging, updating the downlink signaling routing data.

In a possible implementation, before the receiving a downlink signaling message sent by a first network element, the following is further included:
receiving a registration request from the target terminal; where the registration request is used for applying for access to the core network;
forwarding the registration request to the core network, to complete a registration process of the target terminal in the core network;
notifying the target terminal of first information that registration in the core network is successful, where the first information carries an indication parameter, and the indication parameter is used for indicating a notification mechanism for state change between the target terminal and the first RANF; and
creating or updating, according to a mapping relationship between the target terminal and the first RANF, the downlink signaling routing data.

In a possible implementation, the indication parameter includes:
an idle-state RANF update indication and an RANF notification area, where the idle-state RANF update indication is used for indicating whether to notify the first RANF when an RANF connected to or communicating with the target terminal changes, and the RANF notification area is used for indicating a service area of the first RANF.

In a possible implementation, the method further includes:
maintaining, according to a current state of the target terminal, the downlink signaling routing data; where the current state includes a connected state, an inactive state, and an idle state.

In a possible implementation, when the current state is the connected state, the maintaining, according to a current state of the target terminal, the downlink signaling routing data includes:
after the target terminal switches or conditionally switches from a second RANF to the first RANF, notifying the second RANF of successful switch; and
updating, according to a mapping relationship between the target terminal and the first RANF, the downlink signaling routing data.

In a possible implementation, when the current state is the inactive state, the maintaining, according to a current state of the target terminal, the downlink signaling routing data includes:
receiving a radio resource control RRC resume request sent by the target terminal; where the inactive state is an RRC inactive state of the target terminal in the connected state;
acquiring, according to the RRC resume request, context of the target terminal from the second RANF; where the second RANF is an RANF most recently serving the target terminal;
setting, according to whether a notification area of the first RANF is the same as a notification area of the second RANF, the current state;
determining whether the target terminal switches to a new RANF; and
if so, updating the downlink signaling routing data.

In a possible implementation, when the current state is the idle state, the maintaining, according to a current state of the target terminal, the downlink signaling routing data includes:
receiving a radio resource control RRC resume request sent by the target terminal; where a resume reason for the RRC resume request is RANF change;
updating, according to a change reason for the RRC resume request, the downlink signaling routing data; and
notifying the target terminal to return to the idle state.

In a possible implementation, after the notifying the target terminal of first information that registration in the core network is successful, the following is further included:
receiving a deregistration request sent by the target terminal or the AMF; where the deregistration request is used for requesting deregistration of communication connection between the target terminal and the first RANF as well as the core network;
executing, according to the deregistration request, a deregistration process of the target terminal; and
after the target terminal is successfully deregistered, deleting the mapping relationship between the target terminal and the first RANF from the downlink signaling routing data.

In a possible implementation, after the receiving a deregistration request sent by the AMF, the following is further included:
sending the deregistration request to the target terminal; and
receiving information that deregistration is accepted which is returned by the target terminal based on the deregistration request.

In a possible implementation, the second network element includes:
a unified data repository UDR, unified data management UDM, a network repository function NRF, and user RAN data management URDM.

In a second aspect, an embodiment of the present disclosure provides a method for downlink signaling transmission, applied to a first network element in a core network, and including:
querying an RANF currently serving the target terminal recorded in downlink signaling routing data stored in a second network element, to obtain a first RANF; where the downlink signaling routing data is used for recording a mapping relationship between an RANF most recently serving a terminal and the terminal;
generating a downlink signaling message for the target terminal; and
sending the downlink signaling message to the first RANF, the first RANF being configured to transmit the downlink signaling message to the target terminal.

In a possible implementation, when the target terminal is in an idle state, before the querying an RANF currently serving the target terminal recorded in downlink signaling routing data stored in a second network element, the following is further included:
sending a paging request to an access and mobility management function AMF, the paging request being used for requesting the AMF to page the target terminal in the idle state.

In a possible implementation, when the target terminal is in an inactive state, before the querying an RANF currently serving the target terminal recorded in downlink signaling routing data stored in a second network element, the following is further included:
querying an RANF most recently serving the target terminal recorded in the second network element, to obtain the first RANF; and
sending a regional paging request to the first RANF; wherein the regional paging request is used for requesting paging the target terminal within a service area of the first RANF.

In a third aspect, an embodiment of the present disclosure provides an apparatus for downlink signaling transmission, applied to a first RANF adopting a service-based architecture, and including a memory, a transceiver, and a processor.

The memory is configured to store a computer program; the transceiver is configured to send and receive data under control of the processor; and the processor is configured to read the computer program in the memory and execute following operations:
receiving a downlink signaling message sent by a first network element in a core network; where the downlink signaling message is generated for a target terminal, the first network element is configured to query downlink signaling routing data from a second network element in the core network and determine, according to the downlink signaling routing data, that an RANF currently serving the target terminal is the first RANF, and the downlink signaling routing data is used for recording a mapping relationship between an RANF most recently serving a terminal and the terminal; and
sending the downlink signaling message to the target terminal.

In a possible implementation, the processor is further configured to:
before receiving the downlink signaling message sent by the first network element, if the target terminal is in an idle state, page, according to indication information from an access and mobility management function AMF, the target terminal in the idle state; where the AMF is configured to send, according to a paging request from the first network element, the indication information, and the paging request is used for paging the target terminal in the idle state; and
after completing the paging, update the downlink signaling routing data.

In a possible implementation, the processor is further configured to:
send an update request for updating downlink signaling routing data of the target terminal to the second network element; where the update request carries a mapping relationship between an identifier of the first RANF and an identifier of the target terminal, and the second network element is configured to save, according to the request message, the mapping relationship between the identifier of the first RANF and the identifier of the target terminal in the downlink signaling routing data; and
receive a response message returned by the second network element based on the update request.

In a possible implementation, the processor is further configured to:
before receiving the downlink signaling message sent by the first network element, if the target terminal is in an inactive state, receive a regional paging request sent by the first network element; where the regional paging request is generated by the first network element after determining, through a query on the downlink signaling routing data stored in the second network element, that the first RANF most recently serves the target terminal;
execute, according to the regional paging request, regional paging; and
after completing the regional paging, update the downlink signaling routing data.

In a possible implementation, the processor is further configured to:
before receiving the downlink signaling message sent by the first network element, receive a registration request from the target terminal; where the registration request is used for applying for access to the core network;
forward the registration request to the core network, to complete a registration process of the target terminal in the core network;
notify the target terminal of first information that registration in the core network is successful, where the first information carries an indication parameter, and the indication parameter is used for indicating a notification mechanism for state change between the target terminal and the first RANF; and
create or update, according to the mapping relationship between the target terminal and the first RANF, the downlink signaling routing data.

In a possible implementation, the indication parameter includes:
an idle-state RANF update indication and an RANF notification area, where the idle-state RANF update indication is used for indicating whether to notify the first RANF when an RANF connected to or communicating with the target terminal changes, and the RANF notification area is used for indicating a service area of the first RANF.

In a possible implementation, the processor is further configured to:
maintain, according to a current state of the target terminal, the downlink signaling routing data; where the current state includes a connected state, an inactive state, and an idle state.

In a possible implementation, the processor is further configured to:
when the current state is the connected state, after the target terminal switches or conditionally switches from a second RANF to the first RANF, notify the second RANF of successful switch; and
update, according to a mapping relationship between the target terminal and the first RANF, the downlink signaling routing data.

In a possible implementation, the processor is further configured to:
when the current state is the inactive state, receive a radio resource control RRC resume request sent by the target terminal; where the inactive state is an RRC inactive state of the target terminal in the connected state;
acquire, according to the RRC resume request, context of the target terminal from a second RANF; where the second RANF is an RANF most recently serving the target terminal;
set, according to whether a notification area of the first RANF is the same as a notification area of the second RANF, the current state;
determine whether the target terminal switches to a new RANF; and
if so, update the downlink signaling routing data.

In a possible implementation, the processor is further configured to:
when the current state is the idle state, receive a radio resource control RRC resume request sent by the target terminal; where a resume reason for the RRC resume request is RANF change;
update, according to a change reason for the RRC resume request, the downlink signaling routing data; and
notify the target terminal to return to the idle state.

In a possible implementation, the processor is further configured to:
after notifying the target terminal of the first information that the registration in the core network is successful, receive a deregistration request sent by the target terminal or the AMF; where the deregistration request is used for requesting deregistration of communication connection between the target terminal and the first RANF as well as the core network;
execute, according to the deregistration request, a deregistration process of the target terminal; and
after the target terminal is successfully deregistered, delete the mapping relationship between the target terminal and the first RANF from the downlink signaling routing data.

In a possible implementation, the processor is further configured to:
after receiving the deregistration request sent by the AMF, send the deregistration request to the target terminal; and
receive information that deregistration is accepted which is returned by the target terminal based on the deregistration request.

In a possible implementation, the second network element includes:
a unified data repository UDR, unified data management UDM, a network repository function NRF, and user RAN data management URDM.

In a fourth aspect, an embodiment of the present disclosure provides an apparatus for downlink signaling transmission, applied to a first network element in a core network, and including a memory, a transceiver, and a processor.

The memory is configured to store a computer program; the transceiver is configured to send and receive data under control of the processor; and the processor is configured to read the computer program in the memory and execute following operations:
querying an RANF currently serving the target terminal recorded in downlink signaling routing data stored in a second network element, to obtain a first RANF; where the downlink signaling routing data is used for recording a mapping relationship between an RANF most recently serving a terminal and the terminal;
generating a downlink signaling message for the target terminal; and
sending the downlink signaling message to the first RANF, the first RANF being configured to transmit the downlink signaling message to the target terminal.

In a possible implementation, the processor is further configured to:
when the target terminal is in an idle state, before querying the RANF currently serving the target terminal recorded in the downlink signaling routing data stored in the second network element, send a paging request to an access and mobility management function AMF, the paging request being used for requesting the AMF to page the target terminal in the idle state.

In a possible implementation, the processor is further configured to:
when the target terminal is in an inactive state, before querying the RANF currently serving the target terminal recorded in the downlink signaling routing data stored in the second network element, query an RANF most recently serving the target terminal recorded in the second network element, to obtain the first RANF; and
send a regional paging request to the first RANF; where the regional paging request is used for requesting paging the target terminal within a service area of the first RANF.

In a fifth aspect, an apparatus for downlink signaling transmission, applied to a first RANF adopting a service-based architecture, includes:
a receiving unit, configured to receive a downlink signaling message sent by a first network element in a core network; where the downlink signaling message is generated for a target terminal, the first network element is configured to query downlink signaling routing data from a second network element in the core network and determine, according to the downlink signaling routing data, that an RANF currently serving the target terminal is the first RANF, and the downlink signaling routing data is used for recording a mapping relationship between an RANF most recently serving a terminal and the terminal; and
a sending unit, configured to send the downlink signaling message to the target terminal.

In a possible implementation, the apparatus further includes a paging unit, configured to:
before receiving the downlink signaling message sent by the first network element, if the target terminal is in an idle state, page, according to indication information from an access and mobility management function AMF, the target terminal in the idle state; where the AMF is configured to send, according to a paging request from the first network element, the indication information, and the paging request is used for paging the target terminal in the idle state; and
after completing the paging, update the downlink signaling routing data.

In a possible implementation, the paging unit is further configured to:
send an update request for updating downlink signaling routing data of the target terminal to the second network element; where the update request carries a mapping relationship between an identifier of the first RANF and an identifier of the target terminal, and the second network element is configured to save, according to the request message, the mapping relationship between the identifier of the first RANF and the identifier of the target terminal in the downlink signaling routing data; and
receive a response message returned by the second network element based on the update request.

In a possible implementation, the regional paging unit is further configured to:
if the target terminal is in an inactive state, receive a regional paging request sent by the first network element; where the regional paging request is generated by the first network element after determining, through a query on the downlink signaling routing data stored in the second network element, that the first RANF most recently serves the target terminal;
execute, according to the regional paging request, regional paging; and
after completing the regional paging, update the downlink signaling routing data.

In a possible implementation, the apparatus further includes a registration unit, configured to:
before receiving the downlink signaling message sent by the first network element, receive a registration request from the target terminal; where the registration request is used for applying for access to the core network;
forward the registration request to the core network, to complete a registration process of the target terminal in the core network;
notify the target terminal of first information that registration in the core network is successful, where the first information carries an indication parameter, and the indication parameter is used for indicating a notification mechanism for state change between the target terminal and the first RANF; and
create or update, according to a mapping relationship between the target terminal and the first RANF, the downlink signaling routing data.

In a possible implementation, the indication parameter includes:
an idle-state RANF update indication and an RANF notification area, where the idle-state RANF update indication is used for indicating whether to notify the first RANF when an RANF connected to or communicating with the target terminal changes, and the RANF notification area is used for indicating a service area of the first RANF.

In a possible implementation, the apparatus further includes a maintenance unit, configured to:
maintain, according to a current state of the target terminal, the downlink signaling routing data; where the current state includes a connected state, an inactive state, and an idle state.

In a possible implementation, the maintenance unit is further configured to:
when the current state is the connected state, after the target terminal switches or conditionally switches from a second RANF to the first RANF, notify the second RANF of successful switch; and
update, according to a mapping relationship between the target terminal and the first RANF, the downlink signaling routing data.

In a possible implementation, the maintenance unit is further configured to:
when the current state is the inactive state, receive a radio resource control RRC resume request sent by the target terminal; where the inactive state is an RRC inactive state of the target terminal in the connected state;
acquire, according to the RRC resume request, context of the target terminal from a second RANF; where the second RANF is an RANF most recently serving the target terminal;
set, according to whether a notification area of the first RANF is the same as a notification area of the second RANF, the current state;
determine whether the target terminal switches to a new RANF; and
if so, update the downlink signaling routing data.

In a possible implementation, the maintenance unit is further configured to:
when the current state is the idle state, receive a radio resource control RRC resume request sent by the target terminal; where a resume reason for the RRC resume request is RANF change;
update, according to a change reason for the RRC resume request, the downlink signaling routing data; and
notify the target terminal to return to the idle state.

In a possible implementation, the apparatus further includes a deregistration unit, configured to:
after notifying the target terminal of the first information that the registration in the core network is successful, receive a deregistration request sent by the target terminal or the AMF; where the deregistration request is used for requesting deregistration of communication connection between the target terminal and the first RANF as well as the core network;
execute, according to the deregistration request, a deregistration process of the target terminal; and
after the target terminal is successfully deregistered, delete the mapping relationship between the target terminal and the first RANF from the downlink signaling routing data.

In a possible implementation, the deregistration unit is further configured to:
after receiving the deregistration request sent by the AMF, send the deregistration request to the target terminal; and
receive information that deregistration is accepted which is returned by the target terminal based on the deregistration request.

In a possible implementation, the second network element includes:
a unified data repository UDR, unified data management UDM, a network repository function NRF, and user RAN data management URDM.

In a sixth aspect, an apparatus for downlink signaling transmission, applied to a first network element in a core network, includes:
a query unit, configured to query an RANF currently serving the target terminal recorded in downlink signaling routing data stored in a second network element, to obtain a first RANF; where the downlink signaling routing data is used for recording a mapping relationship between a radio access network function RANF most recently serving a terminal and the terminal;
a generation unit, configured to generate a downlink signaling message for the target terminal; and
a sending unit, configured to send the downlink signaling message to the first RANF, the first RANF being configured to transmit the downlink signaling message to the target terminal.

In a possible implementation, the query unit is further configured to:
when the target terminal is in an idle state, before querying the RANF currently serving the target terminal recorded in the downlink signaling routing data stored in the second network element, send a paging request to an access and mobility management function AMF, the paging request being used for requesting the AMF to page the target terminal in the idle state.

In a possible implementation, the query unit is further configured to:
when the target terminal is in an inactive state, before querying the RANF currently serving the target terminal recorded in the downlink signaling routing data stored in the second network element, query an RANF most recently serving the target terminal recorded in the second network element, to obtain the first RANF; and
send a regional paging request to the first RANF; where the regional paging request is used for requesting paging the target terminal within a service area of the first RANF.

In a seventh aspect, an embodiment of the present disclosure provides a computer-readable non-volatile storage medium, the computer-readable non-volatile storage medium stores a computer program, and the computer program is used for causing the processor to execute the method described in the first or second aspect.

Through technical solutions in one or more of the embodiments in the present disclosure, the embodiments of the present disclosure have at least following technical effects.

In the embodiments provided by the present disclosure, since downlink signaling routing data is stored in a second network element of a core network, the downlink signaling routing data being used for recording a mapping relationship between an RANF most recently serving a terminal and the terminal, a first network element sending downlink signaling can determine an RANF most recently serving a target terminal through a query on the downlink signaling routing data, and then send a downlink signaling message to a first RANF, to cause the first RANF to send the received downlink signaling message to the target terminal. In this way, there is no need for downlink signaling to be forwarded through an AMF as in a current 5G system, enabling compatibility with a first RANF adopting a service-based architecture, and a network element in the core network is able to directly access an RANF, reducing intermediate steps, simplifying a downlink signaling process, lowering latency, and improving transmission efficiency of the downlink signaling.

### BRIEF DESCRIPTION OF DRAWINGS

FIG. 1 is a diagram of a 5G system network architecture.
FIG. 2 is an interaction diagram of initial registration of a target terminal provided by an embodiment of the present disclosure.
FIG. 3 is an interaction diagram of non-initial registration of a target terminal provided by an embodiment of the present disclosure.
FIG. 4 is an interaction diagram of maintaining downlink signaling routing data when a current state of a target terminal is a connected state provided by an embodiment of the present disclosure.
FIG. 5 is an interaction diagram of maintaining downlink signaling routing data when a current state of a target terminal is an inactive state provided by an embodiment of the present disclosure.
FIG. 6 is an interaction diagram of maintaining downlink signaling routing data when a current state of a target terminal is an idle state provided by an embodiment of the present disclosure.
FIG. 7 is an interaction diagram of a deregistration process initiated by a target terminal provided by an embodiment of the present disclosure.
FIG. 8 is an interaction diagram of a deregistration process initiated by an AMF provided by an embodiment of the present disclosure.
FIG. 9 is a flow diagram of a method for downlink signaling transmission on a first RANF side provided by an embodiment of the present disclosure.
FIG. 10 is a flow diagram of downlink signaling transmission when a target terminal is in a connected state provided by an embodiment of the present disclosure.
FIG. 11 is a flow diagram of downlink signaling message transmission when a target terminal is in an idle state provided by an embodiment of the present disclosure.
FIG. 12 is a flow diagram of downlink signaling message transmission when a target terminal is in an inactive state provided by an embodiment of the present disclosure.
FIG. 13 is a flow diagram of a method for downlink signaling routing data transmission on a first network element side provided by an embodiment of the present disclosure.
FIG. 14 is a structural diagram of an apparatus for downlink signaling transmission on a first RANF side provided by an embodiment of the present disclosure.
FIG. 15 is a structural diagram of an apparatus for downlink signaling transmission on a first network element side provided by an embodiment of the present disclosure.
FIG. 16 is another structural diagram of an apparatus for downlink signaling transmission on a first RANF side provided by an embodiment of the present disclosure.
FIG. 17 is another structural diagram of an apparatus for downlink signaling transmission on a first network element side provided by an embodiment of the present disclosure.

### DESCRIPTION OF EMBODIMENTS

In embodiments of the present disclosure, the term "and/or" describes an association relationship of associated objects, and indicates that three types of relationships may exist. For example, A and/or B may represent following three situations: A exists alone, A and B exist at the same time, and B exists alone. Character "/" generally indicates an "or" relationship between associated objects before and after it.

In embodiments of the present disclosure, the term "multiple" refers to two or more, and other quantifiers are similar.

Technical solutions in the embodiments of the present disclosure will be clearly and completely described below with reference to drawings in the embodiments of the present disclosure. Obviously, the described embodiments are only a part of the embodiments in the present disclosure, not all of the embodiments. All other embodiments obtained based on the embodiments of the present disclosure by those of ordinary skill in the art without creative efforts shall fall within protection scope of the present disclosure.

The technical solutions provided by the embodiments in the present disclosure may be applied to various systems, especially 5G systems. For example, an applicable system may be a global system of mobile communication (global system of mobile communication, GSM), a code division multiple access (code division multiple access, CDMA) system, a wideband code division multiple access (Wideband Code Division Multiple Access, WCDMA) general packet radio service (General Packet Radio Service, GPRS) system, a long term evolution (long term evolution, LTE) system, an LTE frequency division duplex (frequency division duplex, FDD) system, an LTE time division duplex (time division duplex, TDD) system, an long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. A terminal device and a network device are both included in each of the various systems. The systems may also include a core network part, for example, an evolved packet system (Evolved Packet System, EPS), a 5G system (5GS), etc.

A terminal device involved in the embodiments of the present disclosure may refer to a device providing voice and/or data connectivity to a user, a handheld device with a wireless connectivity function, or other processing devices connected to a wireless modem. In different systems, names of terminal devices may be different. For example, in a 5G system, a terminal device may be referred to as user equipment (User Equipment, UE). A wireless terminal device may communicate with one or more core networks (Core Network, CN) via a radio access network (Radio Access Network, RAN). The wireless terminal device may be a mobile terminal device, such as a mobile phone (or referred to as "cellular" phone) and a computer with a mobile terminal device, which may be, for example, a portable, pocket-sized, handheld, built-in (in a computer), or vehicle-mounted mobile apparatus that exchange voice and/or data with the radio access network, for example, a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), and other devices. The wireless terminal device may also be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), a user device (user device), etc., which is not limited in the embodiments of the present disclosure.

The embodiments of the present disclosure provide a method and an apparatus for downlink signaling transmission, and a storage medium, to solve the technical problem of the lack of a downlink signaling transmission solution based on a service-based RAN architecture.

The method and the apparatus are based on same application concept. Since principles of solving the problem by the method and the apparatus are similar, for implementations of the apparatus and the method, a reference may be made to each other, and repeated descriptions are omitted.

In the embodiments provided by the present disclosure, a radio access network function (Radio Access Network Function, RANF) is a functional module with RAN functionality, adopting a service-based architecture. In the embodiments provided by the present disclosure, to distinguish different RANFs, network elements, etc., they are prefixed with "first" and "second."

Since the RANF adopts the service-based architecture, a network element in a core network, when sending a downlink signaling message to a target terminal, no longer needs transparent transmission via an AMF to an RAN where the target terminal is located. Instead, the network element can directly transmit downlink signaling to an RANF where the target terminal is located, and the RANF then sends the downlink signaling message to the target terminal. In this process, the network element (referred to as a first network element in the present disclosure) sending the downlink signaling needs to determine the RANF where the target terminal is located, which requires the network element to query a routing path to the target terminal (i.e., a mapping relationship between the RANF and the target terminal) from somewhere. In the present disclosure, downlink signaling routing data is provided in a second network element, a mapping relationship between an RANF most recently serving a terminal and the terminal is recorded in the downlink signaling routing data, and the mapping relationship between the RANF serving the target terminal and the target terminal is also recorded in the downlink signaling routing data. In this way, as long as corresponding mapping relationships are created/maintained in the downlink signaling routing data by RANFs serving the terminal, by querying the routing path of the target terminal in the downlink signaling routing data, the network element in the core network can determine which RANF to transmit the downlink signaling to in order to reach the target terminal.

To facilitate understanding, the present disclosure first introduces establishment and maintenance of a routing path to the target terminal by an RANF, and then introduces a routing process of the downlink signaling message. The following will take establishment and maintenance of a routing path of the target terminal by the first RANF as an example for introduction. The second network element storing the downlink signaling routing data includes a UDR, UDM, an NRF, and user RAN data management (User RAN Data Management URDM).

The first RANF establishing the downlink signaling routing data may be implemented through following methods.

A registration request is used for applying for access to the core network; the registration request is forwarded to the core network, to complete a registration process of the target terminal in the core network; the target terminal is notified of first information that registration in the core network is successful, where the first information carries an indication parameter, and the indication parameter is used for indicating a notification mechanism for state change between the target terminal and the first RANF; and creating or updating, according to a mapping relationship between the target terminal and the first RANF, the downlink signaling routing data.

The notification mechanism may be established during a key system process of startup of the target terminal, and is configured by the RANF to the target terminal, which mainly considers whether to report change information of an RANF serving the target terminal to the core network side when the target terminal is in an idle state, and a condition for triggering a change notification. The condition for triggering the change notification may be that one or more of the following items where the target terminal is located change: the RANF, a tracking area (Tracking Area, TA), a RAN-based notification area (RAN-based Notification Area, RNA), or a customized area.

In some embodiments, the indication parameter includes:
an idle-state RANF update indication and an RANF notification area, where the idle-state RANF update indication is used for indicating whether to notify the first RANF when an RANF connected to or communicating with the target terminal changes, and the RANF notification area is used for indicating a service area of the first RANF.

In the embodiments provided by the present disclosure, the mapping relationship between the first RANF and the target terminal may be a mapping relationship between an identifier of the first RANF and an identifier of the target terminal, where the identifier of the target terminal includes: a globally unique temporary UE identity (Globally Unique Temporary UE Identity, GUTI), a subscription permanent identifier (SUbscription Permanent Identifier, SUPI), a subscription concealed identifier (SUbscription Concealed Identifier, SUCI), a 5G S-temporary mobile subscription identifier (5G S-Temporary Mobile Subscription Identifier, 5G-S-TMSI); and the identifier of the first RANF includes: the next generation Node B identifier (the next Generation Node B, gNB ID), a global cell identifier (NR Cell Global Identifier, NRCGI), etc.

In the embodiments provided by the present disclosure, a registration type of the registration request may be initial registration, mobility registration, periodic registration, emergency registration, etc.

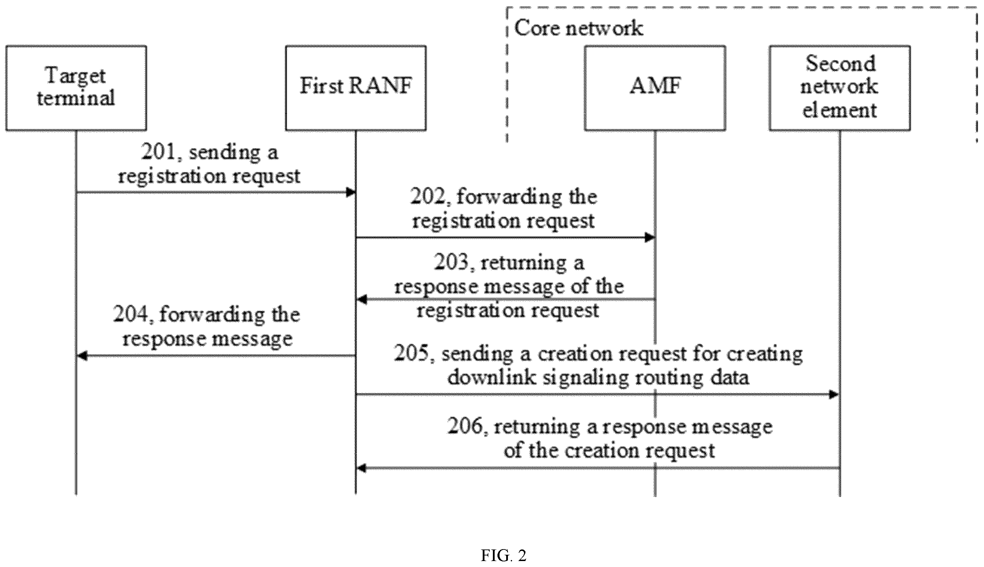

Please refer to FIG. 2, which is an interaction diagram of initial registration of a target terminal provided by an embodiment of the present disclosure.

Step 201: sending a registration request.

The target terminal sends the registration request to a first RANF, with a registration type being initial registration.

Step 202: forwarding the registration request.

The first RANF forwards the registration request to an AMF in a core network.

Step 203: returning a response message of the registration request.

After completing a registration process of the target terminal, the AMF generates the response message of the registration request, for example, a message of successful registration, and returns it to the first RANF.

Step 204: forwarding the response message.

The first RANF adds an indication parameter [idle-state RANF update indication, an RANF notification area] to the response message and forwards the response message to which the indication parameter is added to the target terminal. Based on the indication parameter, the target terminal decides whether to notify the first RANF when being in an idle state and undergoing cell selection/reselection, for example, an RANF serving the target terminal changes.

Step 205: sending a creation request for creating downlink signaling routing data.

Step 206: returning a response message of the creation request.

The first RANF may create the downlink signaling routing data by invoking a creation service operation of a second network element. For example, when the second network element is a UDR, an *Nudr_DM_Create Request* service operation is invoked to create the downlink signaling routing data, and correspondingly, the response message is received through an *Nudr_DM_Create Response* service operation; when the second network element is UDM, an *Nudm_DM_Create Request* service operation is invoked to create the downlink signaling routing data, and correspondingly, the response message is received through an *Nudm_DM_Create Response* service operation; when the second network element is an NRF, an *Nnrf_DM_Create Request* service operation is invoked to create the downlink signaling routing data, and correspondingly, the response message is received through an *Nnrf_DM_Create Response* service operation; and when the second network element is URDM, an *Nurdm_DM_Create Request* service operation is invoked to create the downlink signaling routing data, and correspondingly, the response message is received through an *Nurdm_DM_Create Response* service operation.

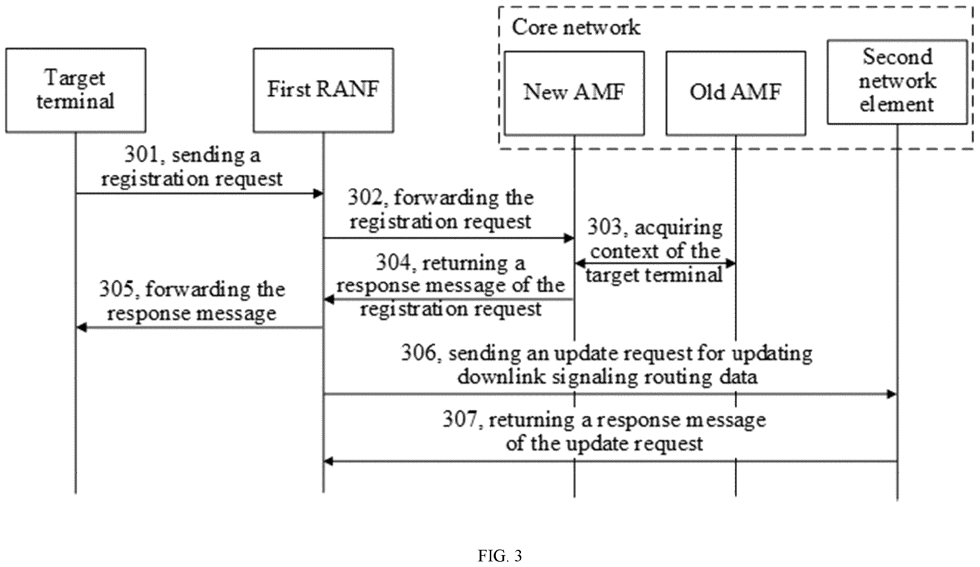

Please refer to FIG. 3, which is an interaction diagram of non-initial registration of a target terminal provided by an embodiment of the present disclosure.

Step 301: sending a registration request.

The target terminal moves from an area served by an old AMF to an area served by a new AM, and the target terminal sends the registration request to a first RANF, with a registration type being non-initial registration, for example, mobility registration, periodic registration, or emergency registration, etc. The first RANF is managed by the new AMF.

Step 302: forwarding the registration request.

The first RANF forwards the registration request to the new AMF in a core network.

Step 303: acquiring context of the target terminal.

The new AMF sends information for requesting the context of the target terminal to the old AMF, and the old AMF sends the context of the target terminal to the new AMF.

Step 304: returning a response message of the registration request.

After completing a registration process of the target terminal, the new AMF generates the response message of the registration request, for example, a message of successful registration, and returns it to the first RANF.

Step 305: forwarding the response message.

The first RANF adds an indication parameter [idle-state RANF update indication, an RANF notification area] to the response message and forwards the response message to which the indication parameter is added to the target terminal. Based on the indication parameter, the target terminal decides whether to notify the first RANF when being in an idle state and undergoing cell selection/reselection, for example, an RANF serving the target terminal changes.

Step 306: sending an update request for updating downlink signaling routing data.

Step 307: returning a response message of the update request.

The first RANF may update the downlink signaling routing data by invoking an update service operation of a second network element. For example, when the second network element is a UDR, an *Nudr_DM_Update Request* service operation is invoked to update the downlink signaling routing data, and correspondingly, the response message is received through an *Nudr_DM_Update Response* service operation; when the second network element is UDM, an *Nudm_DM_Update Request* service operation is invoked to update the downlink signaling routing data, and correspondingly, the response message is received through an *Nudm_DM_Update Response* service operation; when the second network element is a NRF, an *Nnrf_DM_Update Request* service operation is invoked to update the downlink signaling routing data, and correspondingly, the response message is received through an *Nnrf_DM_Update Response* service operation; and when the second network element is URDM, an *Nurdm_DM_Update Request* service operation is invoked to update the downlink signaling routing data, and correspondingly, the response message is received through an *Nurdm_DM_Update Response* service operation.

Since the target terminal may move at any time from a service area of one RANF to a service area of another RANF, an RANF currently serving the target terminal needs to maintain a mapping relationship corresponding to the target terminal in the downlink signaling routing data. During a moving process, a communication state of the target terminal may change, and a current state of the target terminal at a current moment may be a connected state, an inactive state, or an idle state. Therefore, maintaining the downlink signaling routing data according to the current state of the target terminal includes following solutions.

First, when the current state of the target terminal is the connected state, the maintaining the downlink signaling routing data according to the current state of the target terminal may be implemented through following methods:
after the target terminal switches or conditionally switches from a second RANF to the first RANF, notifying the second RANF of successful switch; and updating the downlink signaling routing data.

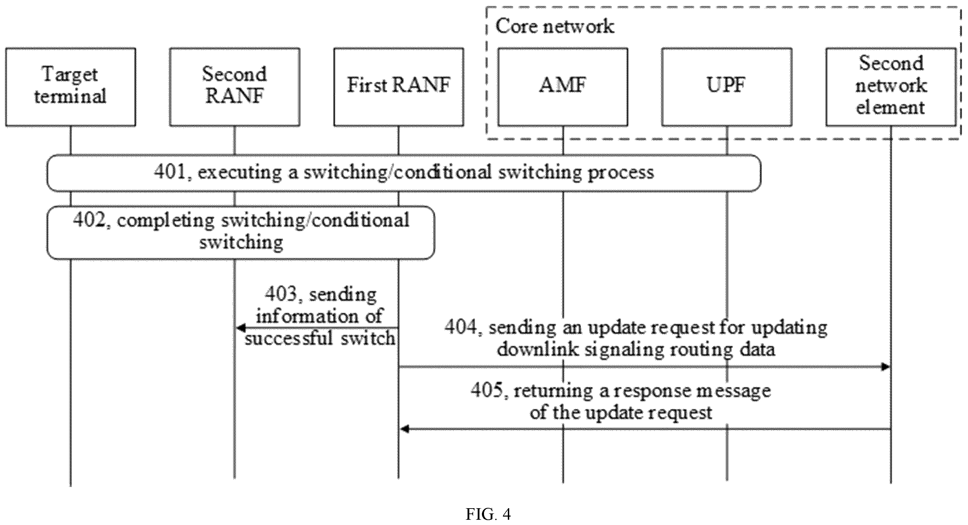

Please refer to FIG. 4, which is an interaction diagram of maintaining the downlink signaling routing data when the current state of the target terminal is the connected state provided by an embodiment of the present disclosure.

Step 401: executing a switching/conditional switching process.

The target terminal switches/conditionally switches from the second RANF to the first RANF, which is implemented by the AMF and an UPF in the core network.

Step 402: completing switching/conditional switching.

After the target terminal successfully switches to the first RANF, step 403 is executed.

Step 403: sending information of successful switch.

The first RANF sends the information of the successful switch to the second RANF.

Step 404: sending an update request for updating the downlink signaling routing data.

The first RANF sends the request for updating the downlink signaling routing data to the second network element, and specifically, the first RANF invokes an update service operation of the second network element to update the mapping relationship between the first RANF and the target terminal into the downlink signaling routing data.

Step 405: returning a response message of the update request.

The second network element returns the response message of the update request.

In a second situation, when the current state is the inactive state, the maintaining the downlink signaling routing data according to the current state of the target terminal may be implemented through following methods:
receiving a radio resource control (Radio Resource Control, RRC) resume request sent by the target terminal; where the inactive state is an RRC inactive state of the target terminal in the connected state; acquiring, according to the RRC resume request, context of the target terminal from the second RANF; where the second RANF is an RANF most recently serving the target terminal; setting, according to whether a notification area of the first RANF is the same as a notification area of the second RANF, the current state; determining whether the target terminal switches to a new RANF; and if so, updating the downlink signaling routing data.

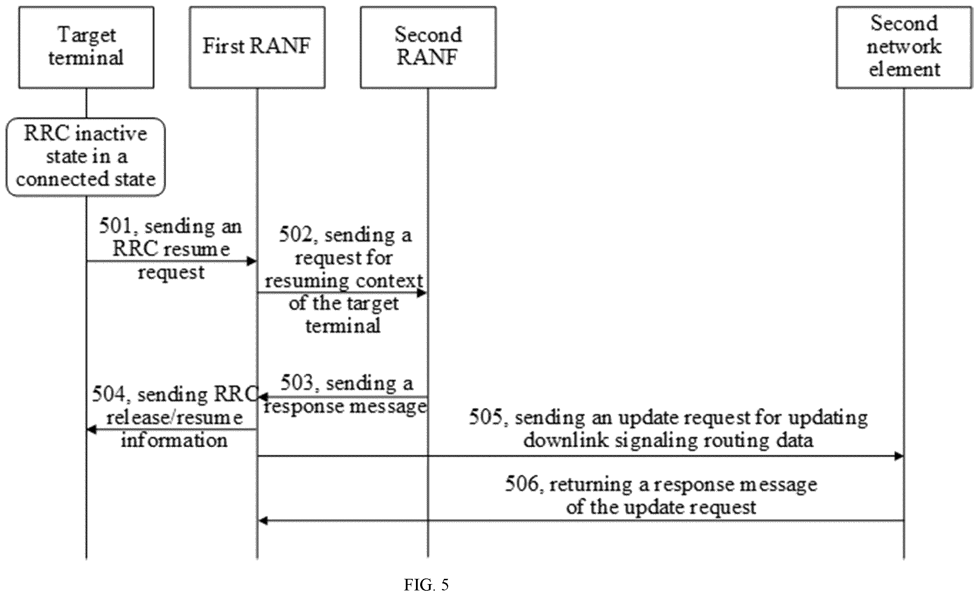

Please refer to FIG. 5, which is an interaction diagram of maintaining the downlink signaling routing data when the current state of the target terminal is the inactive state provided by an embodiment of the present disclosure.

Step 501: sending an RRC resume request.

The target terminal is in an RRC inactive state in the connected state, and at this time, the target terminal sends the RRC resume request to the first RANF.

Step 502: sending a request for resuming context of the target terminal.

The first RANF sends the request for resuming the context of the target terminal to the second RANF most recently serving the target terminal.

Step 503: sending a response message.

An interface between the first RANF and the second RANF may be an Xn interface or a service-based interface, which is not limited specifically. The second RANF sends the response message of the request for resuming the context of the target terminal to the first RANF, where the existing message may be information about success or failure of resuming the context of the target terminal, and if successful, the context of the target terminal is acquired from the response message.

Step 504: sending RRC release/resume information.

The first RANF sets the current state of the target terminal by determining whether a notification area thereof is the same as a notification area of the second RAN. If so, the current state of the target terminal is set to the connected state or the idle state, and the RRC resume information is sent to the target terminal; and if not, the current state of the target terminal is set to the non-connected state, and the RRC release information is sent to the target terminal.

Step 505: sending an update request for updating the downlink signaling routing data.

The first RANF sends the request for updating the downlink signaling routing data to the second network element, and specifically, the first RANF invokes the update service operation of the second network element to update the mapping relationship between the first RANF and the target terminal into the downlink signaling routing data.

Step 506: returning a response message of the update request.

The second network element returns the response message of the update request to the first RANF.

In a third situation, when the current state of the target terminal is the idle state, the maintaining the downlink signaling routing data according to the current state of the target terminal may be implemented through following methods:
receiving a radio resource control RRC resume request sent by the target terminal; where a resume reason for the RRC resume request is RANF change; updating, according to a change reason for the RRC resume request, the downlink signaling routing data; and notifying the target terminal to return to the idle state.

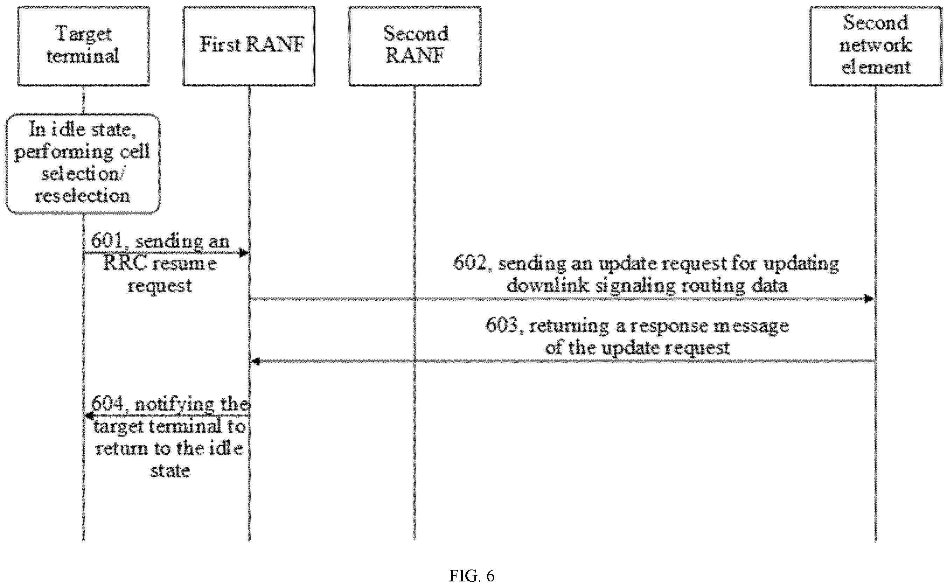

Please refer to FIG. 6, which is an interaction diagram of maintaining the downlink signaling routing data when the current state of the target terminal is the idle state provided by an embodiment of the present disclosure.

Step 601: sending an RRC resume request.

The target terminal is located in a service area of the second RANF, and in the idle state, cell selection/reselection is performed. After the cell selection/reselection, the target terminal is located in a service area of the first RANF. Assuming that during a registration process of the target terminal, an indication parameter is set in a registration acceptance message (a response message of a registration request) received by the target terminal and a condition for triggering change notification is satisfied, for example, one or more of the following items where the target terminal is located change: an RANF, a TA, an RNA, or a customized area change, a subsequent new process is executed to notify the first RANF.

The target terminal sends the RRC resume request to the first RANF, with a resume reason being RANF Update ("an RANF changes after the cell selection or reselection of the target terminal in the idle state").

Step 602: sending an update request for updating the downlink signaling routing data.

After the first RANF receives the RRC resume request from the target terminal, with the resume reason being "an area where UE is located changes after the cell selection or reselection of the target terminal in the idle state", the first RANF invokes an update request service operation of the second network element to update the downlink signaling routing data with the mapping relationship between the first RANF and the target terminal.

Step 603: returning a response message of the update request.

The second network element invokes an update response service operation thereof to return the response message of the update request to the first RANF.

Step 604: notifying the target terminal to return to the idle state.

The first RANF notifies the target terminal to return to the idle state.

During a key system process such as shutdown of the target terminal, etc., the first RANF needs to clean up a mapping relationship corresponding to the target terminal in the downlink signaling routing data, that is, delete the mapping relationship of the target terminal in the downlink signaling routing data when a deregistration process of the target terminal is executed.

The above-mentioned deregistration process may be initiated by the target terminal or the AMF, which may be implemented specifically through following methods:
receiving a deregistration request sent by the target terminal or the AMF; where the deregistration request is used for requesting deregistration of communication connection between the target terminal and the first RANF as well as the core network; executing, according to the deregistration request, a deregistration process of the target terminal; and after the target terminal is successfully deregistered, deleting the mapping relationship between the target terminal and the first RANF from the downlink signaling routing data.

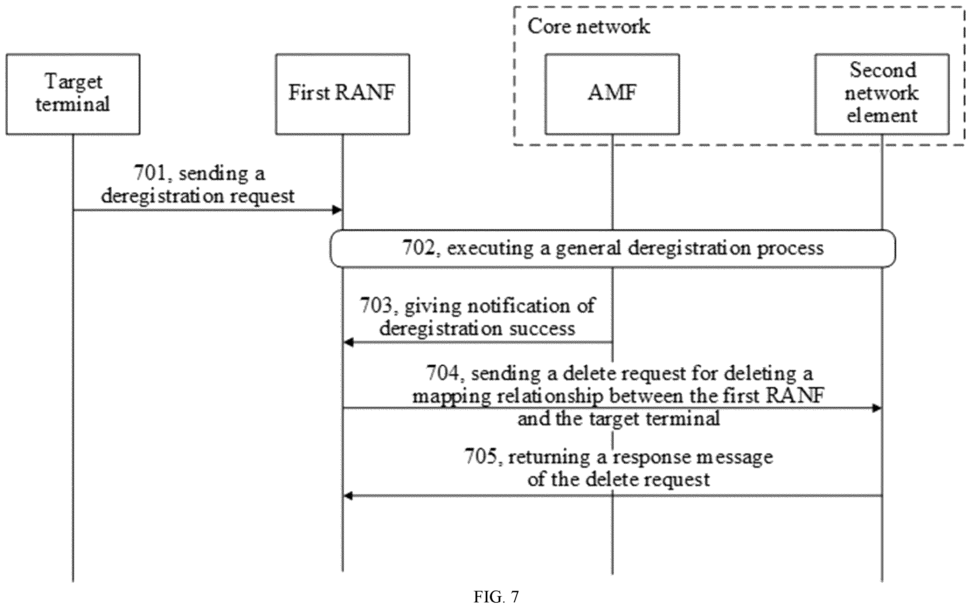

Please refer to FIG. 7, which is an interaction diagram of a deregistration process initiated by the target terminal provided by an embodiment of the present disclosure.

Step 701: sending a deregistration request.

The target terminal sends the deregistration request to the first RANF, to request deregistration of communication connection between the target terminal and the first RANF as well as the core network.

Step 702: executing a general deregistration process.

The first RANF executes the general deregistration process.

Step 703: giving notification of deregistration success.

After the target terminal is deregistered, the AMF notifies the first RANF that the target terminal is successfully deregistered.

Step 704: sending a delete request for deleting the mapping relationship between the first RANF and the target terminal.

After receiving that the target terminal is successfully deregistered, the first RANF invokes a delete request service operation of the second network element to delete a mapping relationship corresponding to the target terminal (i.e., the mapping relationship between the first RANF and the target terminal) in the downlink signaling routing data in the second network element.

Step 705: returning a response message of the delete request.

The second network element invokes a delete response service operation thereof to return the response message of the delete request.

If the second network element is a UDR, a delete request thereof is *Nudr_DM_Delete Request,* and a delete response thereof is *Nudr_DM_Delete Response;* if the second network element is UDM, a delete request thereof is *Nudm_DM_Delete Request,* and a delete response thereof is *Nudm_DM_Delete Response;* if the second network element is an NRF, a delete request thereof is *Nnrf_DM_Delete Request,* and a delete response thereof is *Nnrf_DM_Delete Response;* and if the second network element is URDM, a delete request thereof is *Nurdm_DM_Delete Request,* and a delete response thereof is *Nurdm_DM_Delete Response.*

In some embodiments, after receiving the deregistration request from the AMF, the first RANF sends the deregistration request to the target terminal, and receives information that the deregistration is accepted which is returned by the target terminal based on the deregistration request.

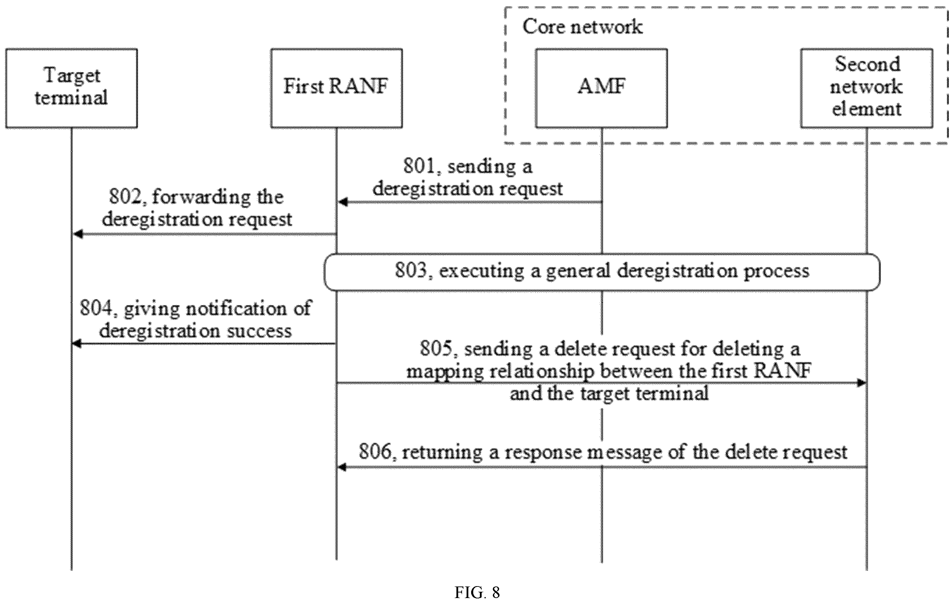

Please refer to FIG. 8, which is an interaction diagram of a deregistration process initiated by the AMF provided by an embodiment of the present disclosure.

Step 801: sending a deregistration request.

The AMF sends the deregistration request for deregistering the target terminal to the first RANF.

Step 802: forwarding the deregistration request.

The first RANF forwards the deregistration request to the target terminal, to notify the target terminal that the target terminal will be deregistered.

Step 803: executing a general deregistration process.

The first RANF executes the general deregistration process for deregistering the target terminal.

Step 804: giving notification of deregistration success.

The target terminal notifies the first RANF of the success of deregistration.

Step 805: sending a delete request for deleting the mapping relationship between the first RANF and the target terminal.

The first RANF receives that the target terminal is successfully deregistered, and invokes the delete request service operation of the second network element to delete the mapping relationship corresponding to the target terminal (i.e., the mapping relationship between the first RANF and the target terminal) in the downlink signaling routing data in the second network element.

Step 806: returning a response message of the delete request.

The second network element invokes the delete response service operation thereof to return the response message of the delete request.

After the aforementioned introduction of creation, maintenance, and deletion of a mapping relationship between a terminal and an RANF serving the terminal in the downlink signaling routing data, any network element in the core network can query the RANF most recently serving the target terminal through the downlink signaling routing data, thereby enabling a downlink signaling message to be transmitted to the target terminal by any network element in the core network to reach the target terminal.

For an RANF, the target terminal may or may not be within a coverage area thereof. If the target terminal is within the coverage area thereof, a current communication state of the target terminal may be the connected state, the idle state, the inactive state, or other states. In response to the above different situations, the RANF will adopt different processing methods after receiving downlink signaling information sent by a network element in the core network. Therefore, the present disclosure provides a method for downlink signaling transmission, applied to a first radio access network function RANF adopting a service-based architecture, and the details are as follows.

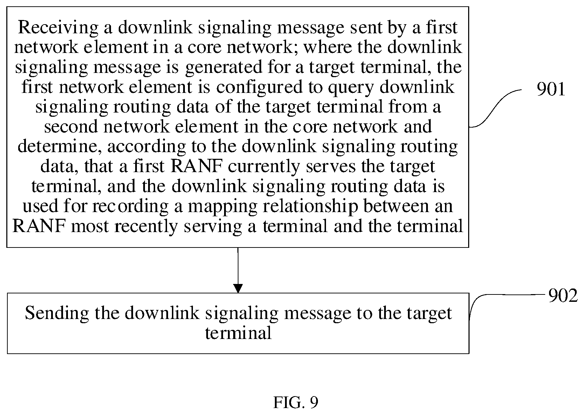

Please refer to FIG. 9, which is a flow diagram of a method for downlink signaling transmission provided by an embodiment of the present disclosure. The processing process of the method is as follows.

Step 901: receiving a downlink signaling message sent by a first network element in a core network; where the downlink signaling message is generated for a target terminal, the first network element is configured to query downlink signaling routing data from a second network element in the core network of the target terminal and determine, according to the downlink signaling routing data, that a first RANF currently serves the target terminal, and the downlink signaling routing data is used for recording a mapping relationship between an RANF most recently serving a terminal and the terminal.

Step 902: sending the downlink signaling message to the target terminal.

Regardless of a current state of the target terminal in a current moment, before the downlink signaling message is transmitted to the target terminal, a current state of the target terminal is a connected state, and an RANF currently serving the target terminal is the first RANF. The current state includes the connected state, an idle state, and an inactive state.

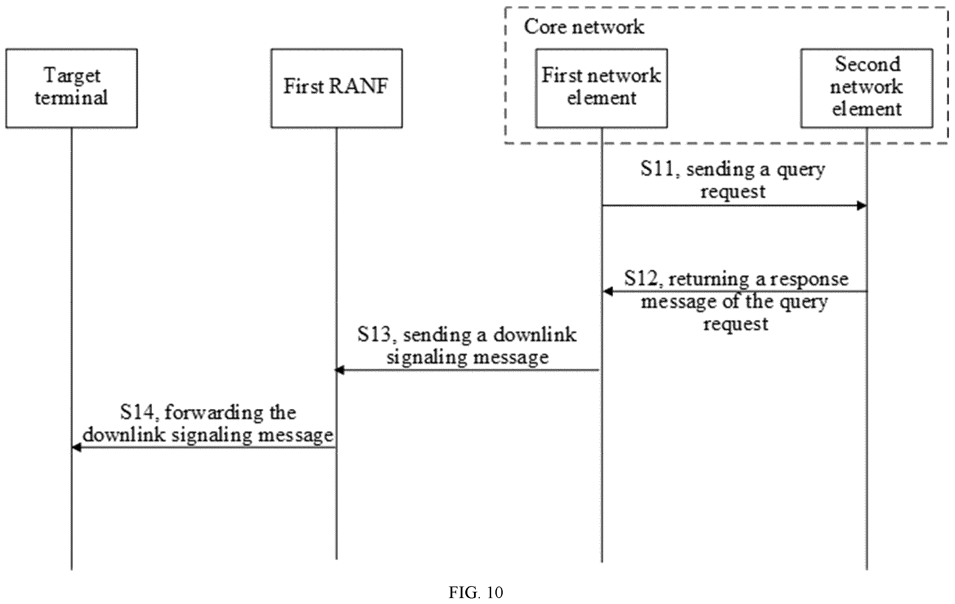

Please refer to FIG. 10, which is a flow diagram of downlink signaling transmission when the target terminal is in the connected state provided by an embodiment of the present disclosure.

Step S11: sending a query request.

The first network element intends to send a downlink signaling message to the target terminal in the connected state and thus sends the query request to the second network element, and the query request is used for querying an RANF most recently serving the target terminal.

Step S12: returning a response message of the query request.

The second network element queries downlink signaling routing data based on the query request, and determines that the first RANF has a mapping relationship with the target terminal, and thus an identifier of the first RANF is carried in the response message and sent to the first network element.

Step S13: sending a downlink signaling message.

The first network element sends the downlink signaling message to the first RANF.

Step S14: forwarding the downlink signaling message.

Assuming that the target terminal in the connected state happens to be located within a service area of an RANF, the first RANF forwards the downlink signaling message to the target terminal.

In some embodiments, before the first RANF receives the downlink signaling message sent by the first network element, if the target terminal is in the idle state, the target terminal in the idle state is paged according to indication information from an access and mobility management function AMF; where the AMF is configured to send the indication information according to a paging request from the first network element, the paging request being used for paging the target terminal in the idle state; and after paging is completed, the downlink signaling routing data is updated.

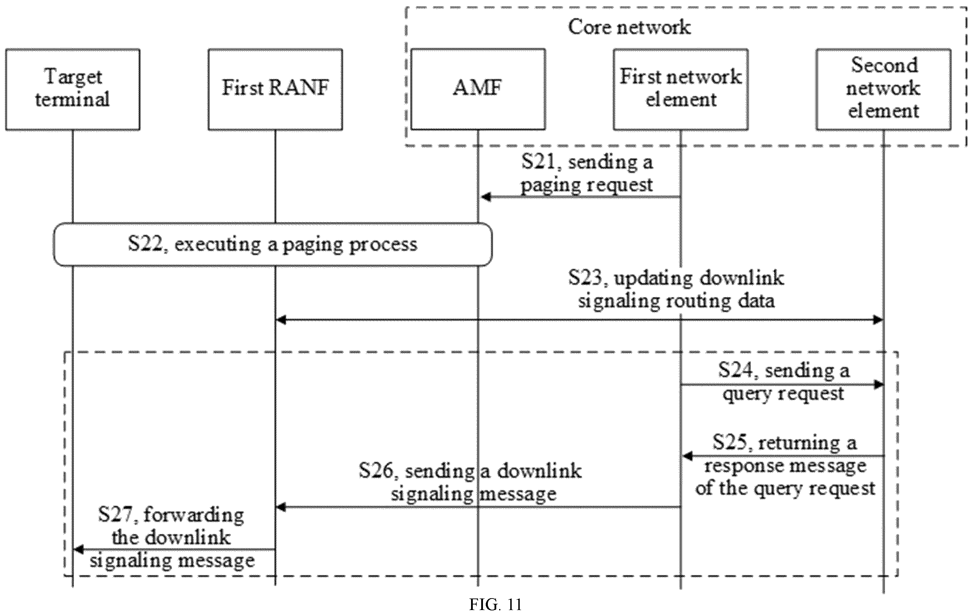

Please refer to FIG. 11, which is a flow diagram of downlink signaling message transmission when the target terminal is in the idle state provided by an embodiment of the present disclosure.

Step S21: sending a paging request.

The target terminal is in the idle state, and the first network element intends to send a downlink signaling message to the target terminal, and thus sends the paging request to the AMF.

Step S22: executing a paging process.

The AMF requests all RANFs to page the target terminal, to execute the paging process.

Assuming that the target terminal is within a service area of the first RANF, the first RANF receives a response from the target terminal after paging the target terminal, and sets the target terminal to be in the connected state, to complete the paging process.

Step S23: updating downlink signaling routing data.

The first RANF updates a mapping relationship between the target terminal and the first network element into the downlink signaling routing data of the second network element.

Step S24: sending a query request.

The first network element sends the query request to the second network element, to request to query an RANF most recently serving the target terminal.

Step S25: returning a response message of the query request.

The second network element queries and determines that the RANF most recently serving the target terminal is the first RANF, and an identifier of the first RANF is carried in the response message and returned to the first network element.

Step S26: sending a downlink signaling message.

The first network element sends the downlink signaling message to the first RANF.

Step S27: forwarding the downlink signaling message.

The first RANF forwards the downlink signaling message to the target terminal.

In some embodiments, before the downlink signaling message sent by the first network element is received, if the target terminal is in the inactive state, a regional paging request sent by the first network element is received; where the regional paging request is generated by the first network element after determining, through a query on the downlink signaling routing data stored in the second network element, that the first RANF most recently serves the target terminal; regional paging is executed according to the regional paging request; and after the regional paging is completed, the downlink signaling routing data is updated.

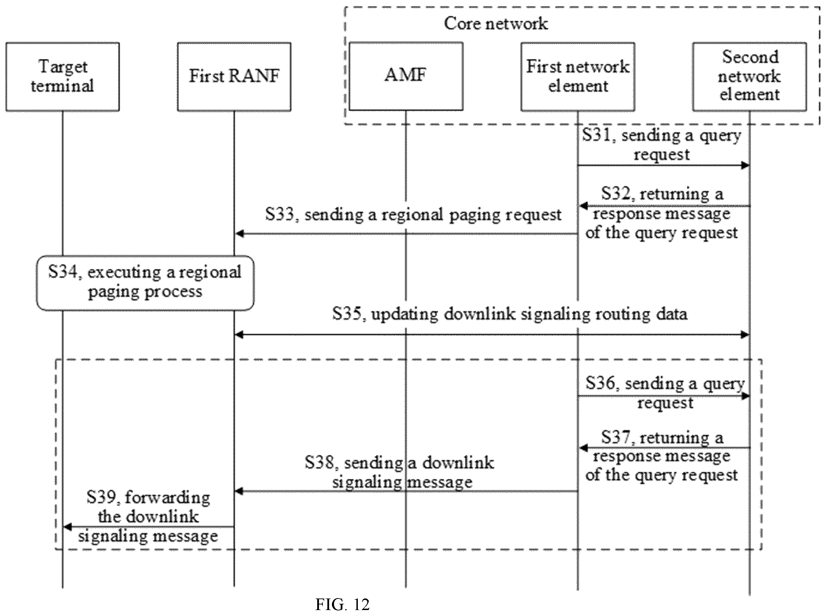

Please refer to FIG. 12, which is a flow diagram of downlink signaling message transmission when the target terminal is in the inactive state provided by an embodiment of the present disclosure.

Step S31: sending a query request.

The target terminal is in the inactive state, and the first network element intends to send a downlink signaling message to the target terminal, and thus sends the query request to the second network element, to request to query an RANF most recently serving the target terminal.

Step S32: returning a response message of the query request.

The second network element queries downlink signaling routing data and determines that the RANF most recently serving the target terminal is the first RANF, and then an identifier of the first RANF is carried in an existing message and sent to the first network element.

Step S33: sending a regional paging request.

The first network element sends the regional paging request to the first RANF, to request to page the target terminal within a service area of the first RANF.

Step S34: executing a regional paging process.

The first RANF executes regional paging within the service area thereof, and after the target terminal responds to the regional paging, the first RANF sets the target terminal to be in the connected state, to complete the regional paging process.

Step S35: updating the downlink signaling routing data.

The first RANF updates a mapping relationship between the target terminal and the first RANF into the downlink signaling routing data of the second network element.

Step S36: sending a query request.

The first network element sends the query request to the second network element, to query an RANF most recently serving the target terminal.

Step S37: returning a response message of the query request.

The second network element queries the downlink signaling routing data and determines that the RANF most recently serving the target terminal is the first RANF, and then the identifier of the first RANF is carried in the response message and sent to the first network element.

Step S38: sending the downlink signaling message.

The first network element sends the downlink signaling message to the first RANF.

Step S39: forwarding the downlink signaling message.

The first RANF forwards the downlink signaling message to the target terminal.

In the embodiments provided by the present disclosure, since downlink signaling routing data is stored in a second network element of a core network, the downlink signaling routing data being used for recording a mapping relationship between an RANF most recently serving a terminal and the terminal, a first network element sending downlink signaling can determine an RANF most recently serving a target terminal through a query on the downlink signaling routing data, and then send a downlink signaling message to a first RANF, to cause the first RANF to send the received downlink signaling message to the target terminal. In this way, there is no need for downlink signaling to be forwarded through an AMF as in a current 5G system, enabling compatibility with a first RANF adopting a service-based architecture, and a network element in the core network is thus able to directly access an RANF, reducing intermediate steps, simplifying a downlink signaling process, lowering latency, and improving transmission efficiency of the downlink signaling.

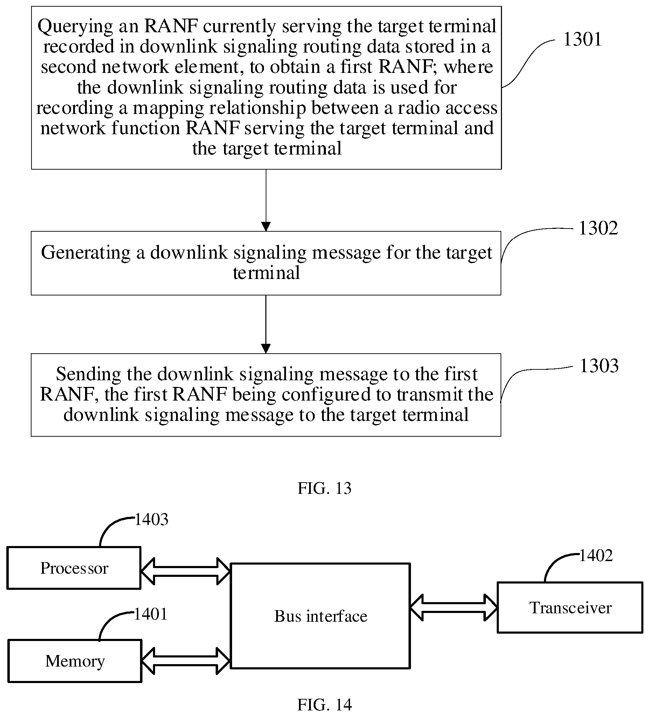

Under same inventive concept, an embodiment of the present disclosure further provides a method for downlink signaling transmission, applied to a first network element in a core network. For specific implementations of the method for downlink signaling transmission on the first network element side, a reference may be made to the description in the method embodiments of the first RANF side, and repeated descriptions are omitted. Please refer to FIG. 13, the method includes:
step 1301: querying an RANF currently serving the target terminal recorded in downlink signaling routing data stored in a second network element, to obtain a first RANF; where the downlink signaling routing data is used for recording a mapping relationship between a radio access network function RANF serving the target terminal and the target terminal;
step 1302: generating a downlink signaling message for the target terminal; and
step 1303: sending the downlink signaling message to the first RANF, the first RANF being configured to transmit the downlink signaling message to the target terminal.

In a possible implementation, when the target terminal is in an idle state, before the querying an RANF currently serving the target terminal recorded in downlink signaling routing data stored in a second network element, the following is further included:
sending a paging request to an access and mobility management function AMF, the paging request being used for requesting the AMF to page the target terminal in the idle state.

In a possible implementation, when the target terminal is in an inactive state, before the querying an RANF currently serving the target terminal recorded in downlink signaling routing data stored in a second network element, the following is further included:
querying an RANF most recently serving the target terminal recorded in the second network element, to obtain the first RANF; and
sending a regional paging request to the first RANF; where the regional paging request is used for requesting paging the target terminal within a service area of the first RANF.

The above-mentioned solutions provided by the embodiments of the present disclosure are also applicable to downlink signaling transmission in scenarios of slicing and roaming, as well as maintenance of downlink signaling routing data.

As shown in FIG. 14, an embodiment of the present disclosure provides an apparatus for downlink signaling transmission, applied to a first RANF adopting a service-based architecture, and including a memory 1401, a transceiver 1402, and a processor 1403.

The memory 1401 is configured to store a computer program; the transceiver 1402 is configured to send and receive data under control of the processor 1403; and the processor 1403 is configured to read the computer program in the memory 1401 and execute following operations:
receiving a downlink signaling message sent by a first network element in a core network; where the downlink signaling message is generated for a target terminal, the first network element is configured to query downlink signaling routing data from a second network element in the core network and determine, according to the downlink signaling routing data, that an RANF currently serving the target terminal is the first RANF, and the downlink signaling routing data is used for recording a mapping relationship between an RANF most recently serving a terminal and the terminal; and
sending the downlink signaling message to the target terminal.

In some embodiments, the processor 1403 is further configured to:
before receiving the downlink signaling message sent by the first network element, if the target terminal is in an idle state, page, according to indication information from an access and mobility management function AMF, the target terminal in the idle state; where the AMF is configured to send, according to a paging request from the first network element, the indication information, and the paging request is used for paging the target terminal in the idle state; and
after completing the paging, update the downlink signaling routing data.

In some embodiments, the processor 1403 is further configured to:
send an update request for updating downlink signaling routing data of the target terminal to the second network element; where the update request carries a mapping relationship between an identifier of the first RANF and an identifier of the target terminal, and the second network element is configured to save, according to the request message, the mapping relationship between the identifier of the first RANF and the identifier of the target terminal in the downlink signaling routing data; and
receive a response message returned by the second network element based on the update request.

In some embodiments, the processor 1403 is further configured to:
before receiving the downlink signaling message sent by the first network element, if the target terminal is in an inactive state, receive a regional paging request sent by the first network element; where the regional paging request is generated by the first network element after determining, through a query on the downlink signaling routing data stored in the second network element, that the first RANF most recently serves the target terminal;
execute, according to the regional paging request, regional paging; and
after completing the regional paging, update the downlink signaling routing data.

In some embodiments, the processor 1403 is further configured to:
before receiving the downlink signaling message sent by the first network element, receive a registration request from the target terminal; where the registration request is used for applying for access to the core network;
forward the registration request to the core network, to complete a registration process of the target terminal in the core network;
notify the target terminal of first information that registration in the core network is successful, where the first information carries an indication parameter, and the indication parameter is used for indicating a notification mechanism for state change between the target terminal and the first RANF; and
create or update, according to the mapping relationship between the target terminal and the first RANF, the downlink signaling routing data.

In a possible implementation, the indication parameter includes:
an idle-state RANF update indication and an RANF notification area, where the idle-state RANF update indication is used for indicating whether to notify the first RANF when an RANF connected to or communicating with the target terminal changes, and the RANF notification area is used for indicating a service area of the first RANF.

In a possible implementation, the processor 1403 is further configured to:
maintain, according to a current state of the target terminal, the downlink signaling routing data; where the current state includes a connected state, an inactive state, and an idle state.

In a possible implementation, the processor 1403 is further configured to:
when the current state is the connected state, after the target terminal switches or conditionally switches from a second RANF to the first RANF, notify the second RANF of successful switch; and
update, according to the mapping relationship between the target terminal and the first RANF, the downlink signaling routing data.

In a possible implementation, the processor 1403 is further configured to:
when the current state is the inactive state, receive a radio resource control RRC resume request sent by the target terminal; where the inactive state is an RRC inactive state of the target terminal in the connected state;
acquire, according to the RRC resume request, context of the target terminal from the second RANF; where the second RANF is an RANF most recently serving the target terminal;
set, according to whether a notification area of the first RANF is the same as a notification area of the second RANF, the current state;
determine whether the target terminal switches to a new RANF; and
if so, update the downlink signaling routing data.

In a possible implementation, the processor 1403 is further configured to:
when the current state is the idle state, receive a radio resource control RRC resume request sent by the target terminal; where a resume reason for the RRC resume request is RANF change;
update, according to a change reason for the RRC resume request, the downlink signaling routing data; and
notify the target terminal to return to the idle state.

In a possible implementation, the processor 1403 is further configured to:
after notifying the target terminal of the first information that the registration in the core network is successful, receive a deregistration request sent by the target terminal or the AMF; where the deregistration request is used for requesting deregistration of communication connection between the target terminal and the first RANF as well as the core network;
execute, according to the deregistration request, a deregistration process of the target terminal; and
after the target terminal is successfully deregistered, delete the mapping relationship between the target terminal and the first RANF from the downlink signaling routing data.

In a possible implementation, the processor 1403 is further configured to:
after receiving the deregistration request sent by the AMF, send the deregistration request to the target terminal; and
receive information that deregistration is accepted which is returned by the target terminal based on the deregistration request.

In a possible implementation, the second network element includes:
a unified data repository UDR, unified data management UDM, a network repository function NRF, and user RAN data management URDM.

The transceiver 1402 is configured to receive and send data under the control of the processor 1403.

In FIG. 14, a bus architecture may include any number of interconnected buses and bridges, through which various circuits, specifically one or more processors represented by the processor 1403 and a memory represented by the memory 1401, are linked together. The bus architecture may further link together various other circuits such as a peripheral, a voltage regulator, and a power management circuit, etc., which are all well known in the art and therefore will not be further described herein. A bus interface provides an interface. The transceiver 1402 may be a plurality of elements, i.e., including a transmitter and a receiver, providing units for communicating with a variety of other apparatuses on transmission media, these transmission media including a wireless channel, a wired channel, a fiber optic cable, and other transmission media. The processor 1403 is responsible for managing the bus architecture and usual processing, and the memory 1401 may store data used by the processor 1403 when performing operations.

The processor 1403 may be a central processing unit (CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD), and the processor may also have a multi-core architecture.

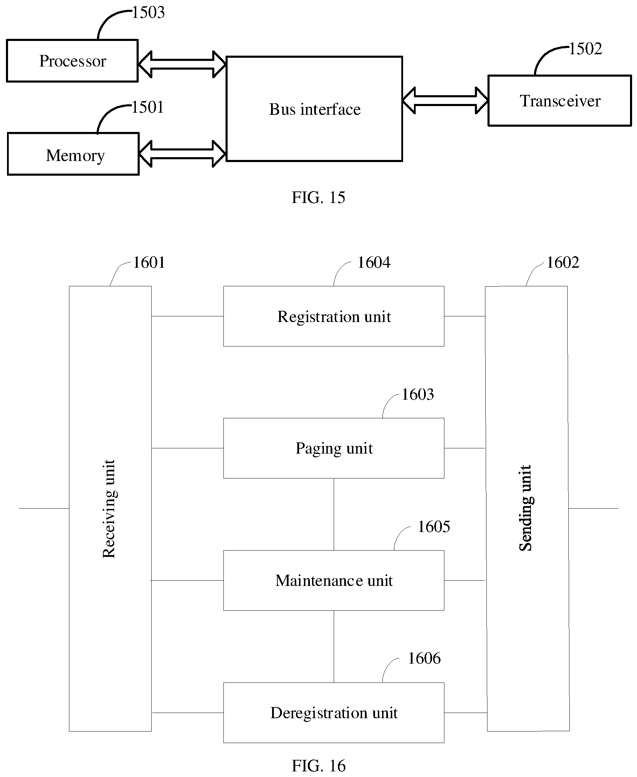

As shown in FIG. 15, an embodiment of the present disclosure provides an apparatus for downlink signaling transmission, applied to a first network element in a core network, and including a memory 1501, a transceiver 1502, and a processor 1503.

The memory 1501 is configured to store a computer program; the transceiver 1502 is configured to send and receive data under control of the processor 1503; and the processor 1503 is configured to read the computer program in the memory 1501 and execute following operations:
querying an RANF currently serving the target terminal recorded in downlink signaling routing data stored in a second network element, to obtain a first RANF; where the downlink signaling routing data is used for recording a mapping relationship between an RANF most recently serving a terminal and the terminal;
generating a downlink signaling message for the target terminal; and
sending the downlink signaling message to the first RANF, the first RANF being configured to transmit the downlink signaling message to the target terminal.

In a possible implementation, the processor 1503 is further configured to:
when the target terminal is in an idle state, before querying the RANF currently serving the target terminal recorded in the downlink signaling routing data stored in the second network element, send a paging request to an access and mobility management function AMF, the paging request being used for requesting the AMF to page the target terminal in the idle state.

In a possible implementation, the processor 1503 is further configured to:
when the target terminal is in an inactive state, before querying the RANF currently serving the target terminal recorded in the downlink signaling routing data stored in the second network element, query an RANF most recently serving the target terminal recorded in the second network element, to obtain the first RANF; and
send a regional paging request to the first RANF; where the regional paging request is used for requesting paging the target terminal within a service area of the first RANF.

The transceiver 1502 is configured to receive and send data under the control of the processor 1503.

In FIG. 15, a bus architecture may include any number of interconnected buses and bridges, through which various circuits, specifically one or more processors represented by the processor 1503 and a memory represented by the memory 1501, are linked together. The bus architecture may further link together various other circuits such as a peripheral, a voltage regulator, and a power management circuit, etc., which are all well known in the art and therefore will not be further described herein. A bus interface provides an interface. The transceiver 1502 may be a plurality of elements, i.e., including a transmitter and a receiver, providing units for communicating with a variety of other apparatuses on transmission media, these transmission media including a wireless channel, a wired channel, a fiber optic cable, and other transmission media. The processor 1503 is responsible for managing the bus architecture and usual processing, and the memory 1501 may store data used by the processor 1403 when performing operations.

The processor 1503 may be a central processing unit (CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD), and the processor may also have a multi-core architecture.

It should be noted herein that the above-mentioned apparatus provided in the embodiment of the present disclosure is capable of implementing all the method steps realized by the above-mentioned method embodiments and is capable of achieving a same technical effect, and same parts of the present embodiment as the method embodiments and beneficial effects will not be specifically repeated herein.

Under same inventive concept, an embodiment of the present disclosure provides an apparatus for downlink signaling transmission, applied to a first RANF. For specific implementations of a method for downlink signaling transmission of the apparatus, a reference may be made to the description in the method embodiments of the first RANF side, and repeated descriptions are omitted. Please refer to FIG. 16, the apparatus includes:
a receiving unit 1601, configured to receive a downlink signaling message sent by a first network element in a core network; where the downlink signaling message is generated for a target terminal, the first network element is configured to query downlink signaling routing data from a second network element in the core network and determine, according to the downlink signaling routing data, that an RANF currently serving the target terminal is the first RANF, and the downlink signaling routing data is used for recording a mapping relationship between an RANF most recently serving a terminal and the terminal; and
a sending unit 1602, configured to send the downlink signaling message to the target terminal.

In a possible implementation, the apparatus further includes a paging unit 1603, configured to:
before receiving the downlink signaling message sent by the first network element, if the target terminal is in an idle state, page, according to indication information from an access and mobility management function AMF, the target terminal in the idle state; where the AMF is configured to send, according to a paging request from the first network element, the indication information, and the paging request is used for paging the target terminal in the idle state; and
after completing the paging, update the downlink signaling routing data.

In a possible implementation, the paging unit 1603 is further configured to:
send an update request for updating downlink signaling routing data of the target terminal to the second network element; where the update request carries a mapping relationship between an identifier of the first RANF and an identifier of the target terminal, and the second network element is configured to save, according to the request message, the mapping relationship between the identifier of the first RANF and the identifier of the target terminal in the downlink signaling routing data; and
receive a response message returned by the second network element based on the update request.

In a possible implementation, the paging unit 1603 is further configured to:
if the target terminal is in an inactive state, receive a regional paging request sent by the first network element; where the regional paging request is generated by the first network element after determining, through a query on the downlink signaling routing data stored in the second network element, that the first RANF most recently serves the target terminal;
execute, according to the regional paging request, regional paging; and
after completing the regional paging, update the downlink signaling routing data.

In a possible implementation, the apparatus further includes a registration unit 1604, configured to:
before receiving the downlink signaling message sent by the first network element, receive a registration request from the target terminal; where the registration request is used for applying for access to the core network;
forward the registration request to the core network, to complete a registration process of the target terminal in the core network;
notify the target terminal of first information that registration in the core network is successful, where the first information carries an indication parameter, and the indication parameter is used for indicating a notification mechanism for state change between the target terminal and the first RANF; and
create or update, according to the mapping relationship between the target terminal and the first RANF, the downlink signaling routing data.

In a possible implementation, the indication parameter includes:
an idle-state RANF update indication and an RANF notification area, where the idle-state RANF update indication is used for indicating whether to notify the first RANF when an RANF connected to or communicating with the target terminal changes, and the RANF notification area is used for indicating a service area of the first RANF.

In a possible implementation, the apparatus further includes a maintenance unit 1605, configured to:
maintain, according to a current state of the target terminal, the downlink signaling routing data; where the current state includes a connected state, an inactive state, and an idle state.

In a possible implementation, the maintenance unit 1605 is further configured to:
when the current state is the connected state, after the target terminal switches or conditionally switches from a second RANF to the first RANF, notify the second RANF of successful switch; and
update, according to the mapping relationship between the target terminal and the first RANF, the downlink signaling routing data.

In a possible implementation, the maintenance unit 1605 is further configured to:
when the current state is the inactive state, receive a radio resource control RRC resume request sent by the target terminal; where the inactive state is an RRC inactive state of the target terminal in the connected state;
acquire, according to the RRC resume request, context of the target terminal from the second RANF; where the second RANF is an RANF most recently serving the target terminal;
set, according to whether a notification area of the first RANF is the same as a notification area of the second RANF, the current state;
determine whether the target terminal switches to a new RANF; and
if so, update the downlink signaling routing data.

In a possible implementation, the maintenance unit 1605 is further configured to:
when the current state is the idle state, receive a radio resource control RRC resume request sent by the target terminal; where a resume reason for the RRC resume request is RANF change;
update, according to a change reason for the RRC resume request, the downlink signaling routing data; and
notify the target terminal to return to the idle state.

In a possible implementation, the apparatus further includes a deregistration unit 1606, configured to:
after notifying the target terminal of the first information that the registration in the core network is successful, receive a deregistration request sent by the target terminal or the AMF; where the deregistration request is used for requesting deregistration of communication connection between the target terminal and the first RANF as well as the core network;
execute, according to the deregistration request, a deregistration process of the target terminal; and
after the target terminal is successfully deregistered, delete the mapping relationship between the target terminal and the first RANF from the downlink signaling routing data.

In a possible implementation, the deregistration unit 1606 is further configured to:
after receiving the deregistration request sent by the AMF, send the deregistration request to the target terminal; and
receive information that deregistration is accepted which is returned by the target terminal based on the deregistration request.

In a possible implementation, the second network element includes:
a unified data repository UDR, unified data management UDM, a network repository function NRF, and user RAN data management URDM.

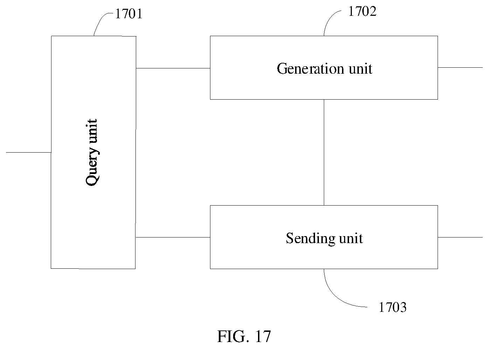

Under same inventive concept, an embodiment of the present disclosure provides an apparatus for downlink signaling transmission, applied to a first network element in a core network. For specific implementations of a method for downlink signaling transmission of the apparatus, a reference may be made to the description in the method embodiments of the first network element side, and repeated descriptions are omitted. Please refer to FIG. 17, the apparatus includes:
a query unit 1701, configured to query an RANF currently serving the target terminal recorded in downlink signaling routing data stored in a second network element, to obtain a first RANF; where the downlink signaling routing data is used for recording a mapping relationship between an RANF most recently serving a terminal and the terminal;
a generation unit 1702, configured to generate a downlink signaling message for the target terminal; and
a sending unit 1703, configured to send the downlink signaling message to the first RANF, the first RANF being configured to transmit the downlink signaling message to the target terminal.

In a possible implementation, the query unit 1701 is further configured to:
when the target terminal is in an idle state, before querying the RANF currently serving the target terminal recorded in the downlink signaling routing data stored in the second network element, send a paging request to an access and mobility management function AMF, the paging request being used for requesting the AMF to page the target terminal in the idle state.

In a possible implementation, the query unit 1701 is further configured to:
when the target terminal is in an inactive state, before querying the RANF currently serving the target terminal recorded in the downlink signaling routing data stored in the second network element, query an RANF most recently serving the target terminal recorded in the second network element, to obtain the first RANF; and
send a regional paging request to the first RANF; where the regional paging request is used for requesting paging the target terminal within a service area of the first RANF.

It should be noted that division of units in the embodiments of the present disclosure is illustrative, merely representing logical functional division, and alternative division methods may be employed in actual implementations. Additionally, functional units in various embodiments of the present disclosure may be integrated into one processing unit, or each unit may exist physically alone, or two or more units may be integrated into one unit. The integrated unit may be implemented in a form of hardware or in a form of a software functional unit.

If implemented as a software functional unit and sold or used as a standalone product, the integrated unit may be stored in a processor-readable storage medium. Based on this understanding, the technical solution of the present disclosure, in essence, or a part contributing to the prior art, or all or part of the technical solution, may be embodied in a form of a software product, and the computer software product is stored in a storage medium and includes instructions to cause a computer device (which may be a personal computer, a server, or a network device, etc.) or a processor (processor) to execute all or part of the steps of the methods described in the various embodiments of the present disclosure. The afore-mentioned storage medium includes: a USB flash drive, a portable hard drive, a read-only memory (Read-Only Memory, ROM), a random access memory (Random Access Memory, RAM), a magnetic disk or an optical disk and other media that can store program codes.

It should be noted herein that the above-mentioned apparatus provided in the embodiment of the present disclosure is capable of implementing all the method steps realized by the above-mentioned method embodiments and is capable of achieving a same technical effect, and same parts of the present embodiment as the method embodiments and beneficial effects will not be specifically repeated herein.

Under same inventive concept, an embodiment of the present disclosure further provides a computer-readable non-volatile storage medium. The computer-readable non-volatile storage medium stores a computer program that is used for causing the processor to execute the method for downlink signaling transmission on the first RANF side or the first network element side as described above.

The computer-readable non-volatile storage medium may be any available medium or data storage device that a processor can access, including but not limited to a magnetic memory (e.g., a floppy disk, a hard disk, a magnetic tape, a magneto-optical disk (MO), etc.), an optical memory (e.g., a CD, a DVD, a BD, an HVD, etc.), and a semiconductor memory (e.g., a ROM, an EPROM, an EEPROM, a non-volatile memory (NAND FLASH), a solid-state drive (SSD)), etc.

Those skilled in the art should understand that the embodiments of the present disclosure may be provided as methods, systems, or computer program products. Accordingly, the present disclosure may take a form of a fully hardware embodiment, a fully software embodiment, or an embodiment that combines software and hardware aspects. Further, the present disclosure may take a form of a computer program product implemented on one or more computer-usable storage media (including, but not limited to, a disk memory and an optical memory, etc.) that contain computer-usable program codes therein.

The present disclosure is described with reference to flow diagrams and/or block diagrams of the methods, the devices (systems), and the computer program products according to the embodiments of the present disclosure. It should be understood that each of processes and/or blocks in the flow diagrams and/or the block diagrams, and a combination of the processes and/or the blocks in the flow diagrams and/or the block diagrams may be implemented by computer-executable instructions. These computer-executable instructions may be provided to a general-purpose computer, a dedicated computer, an embedded processor, or a processor of other programmable data-processing devices to produce a machine such that instructions executed by a computer or the processor of the other programmable data-processing devices produce an apparatus configured to implement functions specified in one or more processes in a flow diagram and/or one or more blocks in a block diagram.

These processor-executable instructions may also be stored in a processor-readable memory capable of directing the computer or the other programmable data-processing devices to operate in a particular manner, such that instructions stored in that processor-readable memory produce a manufacture including an instruction apparatus that implements functions specified in one or more processes in a flow diagram and/or one or more blocks in a block diagram.

These processor-executable instructions may also be loaded onto the computer or the other programmable data-processing devices such that a series of operational steps are performed on the computer or other programmable devices to produce computer-implemented processing, such that instructions executed on the computer or other programmable devices provide steps for implementing functions specified in one or more processes in a flow diagram and/or one or more blocks in a block diagram.

Obviously, those skilled in the art may make various changes and variations to the present disclosure without departing from the spirit and scope of the present disclosure. Thus, if these changes and variations of the present disclosure are within the scope of claims in the present disclosure and technical equivalents thereof, the present disclosure is intended to encompass those changes and variations as well.

## Claims

1. A method for downlink signaling transmission, applied to a first radio access network function RANF adopting a service-based architecture, **characterised in that** the method comprises:
receiving a downlink signaling message sent by a first network element in a core network; wherein the downlink signaling message is generated for a target terminal, the first network element is configured to query downlink signaling routing data from a second network element in the core network and determine, according to the downlink signaling routing data, that an RANF currently serving the target terminal is the first RANF, and the downlink signaling routing data is used for recording a mapping relationship between an RANF most recently serving a terminal and the terminal; and
sending the downlink signaling message to the target terminal.

2. The method according to claim 1, before the receiving a downlink signaling message sent by a first network element, further comprising:
if the target terminal is in an idle state, paging, according to indication information from an access and mobility management function AMF, the target terminal in the idle state; wherein the AMF is configured to send, according to a paging request from the first network element, the indication information, and the paging request is used for paging the target terminal in the idle state; and
after completing the paging, updating the downlink signaling routing data.

3. The method according to claim 2, wherein the updating the downlink signaling routing data comprises:
sending an update request for updating downlink signaling routing data of the target terminal to the second network element; wherein the update request carries a mapping relationship between an identifier of the first RANF and an identifier of the target terminal, and the second network element is configured to save, according to the request message, the mapping relationship between the identifier of the first RANF and the identifier of the target terminal in the downlink signaling routing data; and
receiving a response message returned by the second network element based on the update request.

4. The method according to claim 1, before the receiving a downlink signaling message sent by a first network element, further comprising:
if the target terminal is in an inactive state, receiving a regional paging request sent by the first network element; wherein the regional paging request is generated by the first network element after determining, through a query on the downlink signaling routing data stored in the second network element, that the first RANF most recently serves the target terminal;
executing, according to the regional paging request, regional paging; and
after completing the regional paging, updating the downlink signaling routing data.

5. The method according to any one of claims 1 to 4, before the receiving a downlink signaling message sent by a first network element, further comprising:
receiving a registration request from the target terminal; wherein the registration request is used for applying for access to the core network;
forwarding the registration request to the core network, to complete a registration process of the target terminal in the core network;
notifying the target terminal of first information that registration in the core network is successful, wherein the first information carries an indication parameter, and the indication parameter is used for indicating a notification mechanism for state change between the target terminal and the first RANF; and
creating or updating, according to a mapping relationship between the target terminal and the first RANF, the downlink signaling routing data.

6. The method according to claim 5, wherein the indication parameter comprises:
an idle-state RANF update indication and an RANF notification area, wherein the idle-state RANF update indication is used for indicating whether to notify the first RANF when an RANF connected to or communicating with the target terminal changes, and the RANF notification area is used for indicating a service area of the first RANF.

7. The method according to any one of claims 1 to 3, further comprising:
maintaining, according to a current state of the target terminal, the downlink signaling routing data; wherein the current state comprises a connected state, an inactive state, and an idle state.

8. The method according to claim 7, wherein when the current state is the connected state, the maintaining, according to a current state of the target terminal, the downlink signaling routing data comprises:
after the target terminal switches or conditionally switches from a second RANF to the first RANF, notifying the second RANF of successful switch; and
updating, according to a mapping relationship between the target terminal and the first RANF, the downlink signaling routing data.

9. The method according to claim 7, wherein when the current state is the inactive state, the maintaining, according to a current state of the target terminal, the downlink signaling routing data comprises:
receiving a radio resource control RRC resume request sent by the target terminal; wherein the inactive state is an RRC inactive state of the target terminal in the connected state;
acquiring, according to the RRC resume request, context of the target terminal from a second RANF; wherein the second RANF is an RANF most recently serving the target terminal;
setting, according to whether a notification area of the first RANF is the same as a notification area of the second RANF, the current state;
determining whether the target terminal switches to a new RANF; and
if so, updating the downlink signaling routing data.

10. The method according to claim 7, wherein when the current state is the idle state, the maintaining, according to a current state of the target terminal, the downlink signaling routing data comprises:
receiving a radio resource control RRC resume request sent by the target terminal; wherein a resume reason for the RRC resume request is RANF change;
updating, according to a change reason for the RRC resume request, the downlink signaling routing data; and
notifying the target terminal to return to the idle state.

11. The method according to claim 5, after the notifying the target terminal of first information that registration in the core network is successful, further comprising:
receiving a deregistration request sent by the target terminal or the AMF; wherein the deregistration request is used for requesting deregistration of communication connection between the target terminal and the first RANF as well as the core network;
executing, according to the deregistration request, a deregistration process of the target terminal; and
after the target terminal is successfully deregistered, deleting the mapping relationship between the target terminal and the first RANF from the downlink signaling routing data.

12. The method according to claim 11, after the receiving a deregistration request sent by the AMF, further comprising:
sending the deregistration request to the target terminal; and
receiving information that deregistration is accepted which is returned by the target terminal based on the deregistration request.

13. The method according to any one of claims 1 to 3, wherein the second network element comprises:
a unified data repository UDR, unified data management UDM, a network repository function NRF, and user RAN data management URDM.

14. A method for downlink signaling transmission, applied to a first network element in a core network, and **characterised by** comprising:
querying an RANF currently serving the target terminal recorded in downlink signaling routing data stored in a second network element, to obtain a first RANF; wherein the downlink signaling routing data is used for recording a mapping relationship between an RANF most recently serving a terminal and the terminal;
generating a downlink signaling message for the target terminal; and
sending the downlink signaling message to the first RANF, the first RANF being configured to transmit the downlink signaling message to the target terminal.

15. The method according to claim 14, when the target terminal is in an idle state, before the querying an RANF currently serving the target terminal recorded in downlink signaling routing data stored in a second network element, further comprising:
sending a paging request to an access and mobility management function AMF, the paging request being used for requesting the AMF to page the target terminal in the idle state.

16. The method according to claim 14, when the target terminal is in an inactive state, before the querying an RANF currently serving the target terminal recorded in downlink signaling routing data stored in a second network element, further comprising:
querying an RANF most recently serving the target terminal recorded in the second network element, to obtain the first RANF; and
sending a regional paging request to the first RANF; wherein the regional paging request is used for requesting paging the target terminal within a service area of the first RANF.

17. An apparatus for downlink signaling transmission, applied to a first RANF adopting a service-based architecture, and **characterised by** comprising a memory, a transceiver, and a processor:
wherein the memory is configured to store a computer program; the transceiver is configured to send and receive data under control of the processor; and the processor is configured to read the computer program in the memory and execute following operations:
receiving a downlink signaling message sent by a first network element in a core network; wherein the downlink signaling message is generated for a target terminal, the first network element is configured to query downlink signaling routing data from a second network element in the core network and determine, according to the downlink signaling routing data, that an RANF currently serving the target terminal is the first RANF, and the downlink signaling routing data is used for recording a mapping relationship between an RANF most recently serving a terminal and the terminal; and
sending the downlink signaling message to the target terminal.

18. The apparatus according to claim 17, wherein the processor is further configured to:
before receiving the downlink signaling message sent by the first network element, if the target terminal is in an idle state, page, according to indication information from an access and mobility management function AMF, the target terminal in the idle state; wherein the AMF is configured to send, according to a paging request from the first network element, the indication information, and the paging request is used for paging the target terminal in the idle state; and
after completing the paging, update the downlink signaling routing data.

19. The apparatus according to claim 18, wherein the processor is further configured to:
send an update request for updating downlink signaling routing data of the target terminal to the second network element; wherein the update request carries a mapping relationship between an identifier of the first RANF and an identifier of the target terminal, and the second network element is configured to save, according to the request message, the mapping relationship between the identifier of the first RANF and the identifier of the target terminal in the downlink signaling routing data; and
receive a response message returned by the second network element based on the update request.

20. The apparatus according to claim 17, wherein the processor is further configured to:
before receiving the downlink signaling message sent by the first network element, if the target terminal is in an inactive state, receive a regional paging request sent by the first network element; wherein the regional paging request is generated by the first network element after determining, through a query on the downlink signaling routing data stored in the second network element, that the first RANF most recently serves the target terminal;
execute, according to the regional paging request, regional paging; and
after completing the regional paging, update the downlink signaling routing data.

21. The apparatus according to any one of claims 17 to 20, wherein the processor is further configured to:
before receiving the downlink signaling message sent by the first network element, receive a registration request from the target terminal; wherein the registration request is used for applying for access to the core network;
forward the registration request to the core network, to complete a registration process of the target terminal in the core network;
notify the target terminal of first information that registration in the core network is successful, wherein the first information carries an indication parameter, and the indication parameter is used for indicating a notification mechanism for state change between the target terminal and the first RANF; and
create or update, according to a mapping relationship between the target terminal and the first RANF, the downlink signaling routing data.

22. The apparatus according to claim 21, wherein the indication parameter comprises:
an idle-state RANF update indication and an RANF notification area, wherein the idle-state RANF update indication is used for indicating whether to notify the first RANF when an RANF connected to or communicating with the target terminal changes, and the RANF notification area is used for indicating a service area of the first RANF.

23. The apparatus according to any one of claims 17 to 20, wherein the processor is further configured to:
maintain, according to a current state of the target terminal, the downlink signaling routing data; wherein the current state comprises a connected state, an inactive state, and an idle state.

24. The apparatus according to claim 23, wherein the processor is further configured to:
when the current state is the connected state, after the target terminal switches or conditionally switches from a second RANF to the first RANF, notify the second RANF of successful switch; and
update, according to a mapping relationship between the target terminal and the first RANF, the downlink signaling routing data.

25. The apparatus according to claim 23, wherein the processor is further configured to:
when the current state is the inactive state, receive a radio resource control RRC resume request sent by the target terminal; wherein the inactive state is an RRC inactive state of the target terminal in the connected state;
acquire, according to the RRC resume request, context of the target terminal from a second RANF; wherein the second RANF is an RANF most recently serving the target terminal;
set, according to whether a notification area of the first RANF is the same as a notification area of the second RANF, the current state;
determine whether the target terminal switches to a new RANF; and
if so, update the downlink signaling routing data.

26. The apparatus according to claim 23, wherein the processor is further configured to:
when the current state is the idle state, receive a radio resource control RRC resume request sent by the target terminal; wherein a resume reason for the RRC resume request is RANF change;
update, according to a change reason for the RRC resume request, the downlink signaling routing data; and
notify the target terminal to return to the idle state.

27. The apparatus according to claim 21, wherein the processor is further configured to:
after notifying the target terminal of the first information that the registration in the core network is successful, receive a deregistration request sent by the target terminal or the AMF; wherein the deregistration request is used for requesting deregistration of communication connection between the target terminal and the first RANF as well as the core network;
execute, according to the deregistration request, a deregistration process of the target terminal; and
after the target terminal is successfully deregistered, delete the mapping relationship between the target terminal and the first RANF from the downlink signaling routing data.

28. The apparatus according to claim 27, wherein the processor is further configured to:
after receiving the deregistration request sent by the AMF, send the deregistration request to the target terminal; and
receive information that deregistration is accepted which is returned by the target terminal based on the deregistration request.

29. The apparatus according to any one of claims 17 to 20, wherein the second network element comprises:
a unified data repository UDR, unified data management UDM, a network repository function NRF, and user RAN data management URDM.

30. An apparatus for downlink signaling transmission, applied to a first network element in a core network, and **characterised by** comprising a memory, a transceiver, and a processor:
wherein the memory is configured to store a computer program; the transceiver is configured to send and receive data under control of the processor; and the processor is configured to read the computer program in the memory and execute following operations:
querying an RANF currently serving the target terminal recorded in downlink signaling routing data stored in a second network element, to obtain a first RANF; wherein the downlink signaling routing data is used for recording a mapping relationship between an RANF most recently serving a terminal and the terminal;
generating a downlink signaling message for the target terminal; and
sending the downlink signaling message to the first RANF, the first RANF being configured to transmit the downlink signaling message to the target terminal.

31. The apparatus according to claim 30, wherein the processor is further configured to:
before acquiring downlink signaling routing data of the target terminal stored in the second network element, send a paging request to an access and mobility management function AMF, the paging request being used for requesting the AMF to page the target terminal in an idle state.

32. The apparatus according to claim 31, wherein the processor is further configured to:
before acquiring the downlink signaling routing data of the target terminal stored in the second network element, query an RANF most recently serving the target terminal recorded in the second network element, to obtain the first RANF; and
send a regional paging request to the first RANF; the regional paging request being used for requesting paging the target terminal within a service area of the first RANF.

33. An apparatus for downlink signaling transmission, applied to a first RANF adopting a service-based architecture, and **characterised by** comprising:
a receiving unit, configured to receive a downlink signaling message sent by a first network element in a core network; wherein the downlink signaling message is generated for a target terminal, the first network element is configured to query downlink signaling routing data from a second network element in the core network and determine, according to the downlink signaling routing data, that an RANF currently serving the target terminal is the first RANF, and the downlink signaling routing data is used for recording a mapping relationship between an RANF most recently serving a terminal and the terminal; and
a sending unit, configured to send the downlink signaling message to the target terminal.

34. The apparatus according to claim 33, wherein before receiving the downlink signaling message sent by the first network element, the receiving unit is further configured to:
if the target terminal is in an idle state, page, according to indication information from an access and mobility management function AMF, the target terminal in the idle state; wherein the AMF is configured to send, according to a paging request from the first network element, the indication information, and the paging request is used for paging the target terminal in the idle state; and
after completing the paging, update the downlink signaling routing data.

35. The apparatus according to claim 33, wherein before receiving the downlink signaling message sent by the first network element, the receiving unit is further configured to:
if the target terminal is in an inactive state, receive a regional paging request sent by the first network element; wherein the regional paging request is generated by the first network element after determining, through a query on the downlink signaling routing data stored in the second network element, that the first RANF most recently serves the target terminal;
execute, according to the regional paging request, regional paging; and
after completing the regional paging, update the downlink signaling routing data.

36. The apparatus according to claim 33, 34, or 35, wherein before receiving the downlink signaling message sent by the first network element, the receiving unit is further configured to:
receive a registration request from the target terminal; wherein the registration request is used for applying for access to the core network;
forward the registration request to the core network, to complete a registration process of the target terminal in the core network;
notify the target terminal of first information that registration in the core network is successful, wherein the first information carries an indication parameter, and the indication parameter is used for indicating a notification mechanism for state change between the target terminal and the first RANF; and
create or update, according to a mapping relationship between the target terminal and the first RANF, the downlink signaling routing data.

37. An apparatus for downlink signaling transmission, applied to a first network element in a core network, and **characterised by** comprising:
a query unit, configured to query an RANF currently serving the target terminal recorded in downlink signaling routing data stored in a second network element, to obtain a first RANF; wherein the downlink signaling routing data is used for recording a mapping relationship between a radio access network function RANF most recently serving a terminal and the terminal;
a generation unit, configured to generate a downlink signaling message for the target terminal; and
a sending unit, configured to send the downlink signaling message to the first RANF, the first RANF being configured to transmit the downlink signaling message to the target terminal.

38. The apparatus according to claim 37, wherein when the target terminal is in an idle state, before querying the RANF currently serving the target terminal recorded in the downlink signaling routing data stored in the second network element, the query unit is further configured to:
send a paging request to an access and mobility management function AMF, the paging request being used for requesting the AMF to page the target terminal in the idle state.

39. The apparatus according to claim 37, wherein when the target terminal is in an inactive state, before querying the RANF currently serving the target terminal recorded in the downlink signaling routing data stored in the second network element, the query unit is further configured to:
query an RANF most recently serving the target terminal recorded in the second network element, to obtain the first RANF; and
send a regional paging request to the first RANF; the regional paging request being used for requesting paging the target terminal within a service area of the first RANF.

40. A computer-readable non-volatile storage medium, **characterised in that** the computer-readable non-volatile storage medium stores a computer program, and the computer program is used for causing the processor to execute the method according to any one of claims 1 to 16.
